(19) Europäisches Patentamt
European Patent Office
Office européen des brevets

(11) EP 4 583 177 A1

(12) **EUROPEAN PATENT APPLICATION**

(43) Date of publication:
**09.07.2025 Bulletin 2025/28**

(21) Application number: **24216213.9**

(22) Date of filing: **28.11.2024**

(51) International Patent Classification (IPC):
***H01M 4/04*** *(2006.01)* ***H01M 4/13*** *(2010.01)*
***H01M 4/139*** *(2010.01)* ***H01M 4/62*** *(2006.01)*

(52) Cooperative Patent Classification (CPC):
**H01M 4/139; H01M 4/049; H01M 4/13; H01M 4/621**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.11.2023 JP 2023202585**
**04.10.2024 JP 2024175152**

(71) Applicant: **Ricoh Company, Ltd.**
**Tokyo 143-8555 (JP)**

(72) Inventors:
- **Goto, Shun**
  **Tokyo, 143-8555 (JP)**
- **Kida, Hitoshi**
  **Tokyo, 143-8555 (JP)**
- **Higashi, Ryuji**
  **Tokyo, 143-8555 (JP)**
- **Suzuki, Hiroto**
  **Tokyo, 143-8555 (JP)**
- **Kajita, Tomomasa**
  **Tokyo, 143-8555 (JP)**
- **Kuriyama, Hiromichi**
  **Tokyo, 143-8555 (JP)**

(74) Representative: **Marks & Clerk LLP**
**15 Fetter Lane**
**London EC4A 1BW (GB)**

# (54) METHOD OF MANUFACTURING ELECTRODE, COMPOSITE ELECTRODE, ELECTROCHEMICAL ELEMENT, AND APPARATUS FOR MANUFACTURING ELECTRODE

(57) A method of manufacturing an electrode includes applying a first liquid composition containing a first solvent and polymerizable compounds to a substrate, reacting the first liquid composition, removing the first solvent to form an insulating resin layer, applying a second liquid composition containing an active material and a second solvent to the substrate, and removing the second solvent composition to form an electrode composite layer, wherein the removing the first solvent and the removing the second solvent are conducted at the same time.

FIG. 1

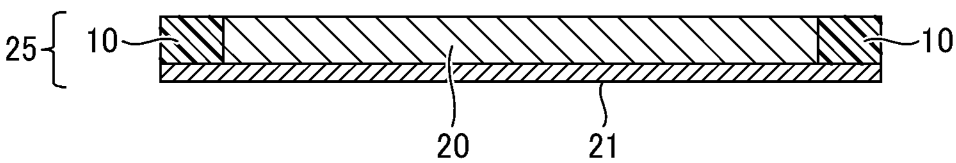


EP 4 583 177 A1

## Description

BACKGROUND

Technical Field

The present disclosure is related to a method of manufacturing an electrode, a composite electrode, an electrochemical element, and an apparatus for manufacturing electrode.

Description of the Related Art

Solid state secondary batteries are superior in terms of safety compared with typical lithium-ion secondary batteries because they are resistant to temperature changes and have a lower risk of ignition. Additionally, they can be rapidly charged, which enhances performance. For these reasons, the demand for their use in electric vehicles and other applications is expected to expand. Furthermore, there is a growing need for thin batteries to be installed in various wearable devices and medical patches, leading to diversified requirements for solid state secondary batteries.

In solid state batteries, each including a positive electrode, a negative electrode, and a solid electrolyte layer, a laminate including the positive electrode, solid electrolyte layer, and negative electrode may be pressed at very high pressure to achieve high density to enhance performance. However, during this pressing process, damage like cracking may occur in the solid electrolyte layer. This damage may lead to short circuits between the positive and negative electrodes during use of the solid state battery, presenting a significant problem.

In an attempt to solve this issue, a method of manufacturing an electrode with a thin-film electrode formed by creating an electrode composite layer on an electrode substrate has been proposed in Japanese Unexamined Patent Application Publication No. 2019-61943, wherein a resin layer adheres to at least one of the peripheral portion of the electrode composite layer or the surface of the electrode composite layer, extending in the direction along the plane of the electrode substrate.

SUMMARY

According to the present disclosure, a method of manufacturing an electrode is provided which can prevent the electrode from curling (warping), even when the electrode uses an insulating resin layer as a guide in the manufacturing process.

According to the present disclosure, a method of manufacturing an electrode is provided which includes applying a first liquid composition containing a first solvent and polymerizable compounds to a substrate, reacting the first liquid composition, removing the first solvent to form an insulating resin layer, applying a second liquid composition containing an active material and a second solvent to the substrate, and removing the second solvent composition to form an electrode composite layer, wherein the removing the first solvent and the removing the second solvent are conducted at the same time.

As another aspect of the present disclosure, a composite electrode is provided which includes an insulating resin layer containing a polymerizable compound and an electrode composite layer containing an active material and a resin, wherein the electrode composite layer seeps in the insulating resin layer in a direction perpendicular to an interface therebetween.

As another aspect of the present disclosure, an electrochemical element is provided which contains the composite electrode mentioned above.

As another aspect of the present disclosure, an apparatus for manufacturing an electrode is provided which includes a device to apply a first liquid composition containing a first solvent and a polymerizable compound to a substrate to form an insulating resin layer, a device to apply a second liquid composition containing an active material and a second solvent to the substrate to form an electrode composite layer, and a device to remove the first solvent and the second solvent simultaneously.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating a cross-sectional view of a device for manufacturing an electrode for electrochemical element according to the present disclosure;

FIG. 2A is a schematic diagram illustrating a cross sectional view of an electrode laminate according to the present disclosure;

FIG. 2B is a schematic diagram illustrating a cross sectional view of an electrode laminate according to the present disclosure;

FIG. 2C is a schematic diagram illustrating a cross sectional view of an electrode laminate according to the present disclosure;

FIG. 3 is a schematic diagram illustrating a top view of a device for manufacturing an electrode for electrochemical element according to the present disclosure;

FIG. 4 is a schematic diagram illustrating a top view of a device for manufacturing an electrode for electrochemical element according to the present disclosure;

FIG. 5 is a schematic diagram illustrating a top view of a device for manufacturing an electrode for electrochemical element according to the present disclosure;

FIG. 6A is a schematic diagram illustrating a cross sectional view (part 1) of a positional relationship between the insulating resin layer and electrode composite layer in an electrode for electrochemical element according to the present disclosure;

FIG. 6B is a schematic diagram illustrating a cross sectional view (part 2) of a positional relationship between the insulating resin layer and electrode composite layer in an electrode for electrochemical element according to the present disclosure;

FIG. 6C is a schematic diagram illustrating a cross sectional view (part 3) of a positional relationship between the insulating resin layer and electrode composite layer in an electrode for electrochemical element according to the present disclosure;

FIG. 6D is a schematic diagram illustrating a cross sectional view (part 4) of a positional relationship between the insulating resin layer and electrode composite layer in an electrode for electrochemical element according to the present disclosure;

FIG. 7 is a schematic diagram illustrating a top view of a positional relationship between the insulating resin layer and electrode composite layer in an electrode for electrochemical element according to the present disclosure;

FIG. 8A is a schematic diagram illustrating a cross sectional view (part 1) of a relationship of the average thickness between the insulating resin layer and electrode composite layer in an electrode for electrochemical element according to the present disclosure;

FIG. 8B is a schematic diagram illustrating a cross sectional view (part 2) of a relationship of the average thickness between the insulating resin layer and electrode composite layer in an electrode for electrochemical element according to the present disclosure;

FIG. 8C is a schematic diagram illustrating a cross sectional view (part 3) of a relationship of the average thickness between the insulating resin layer and electrode composite layer in an electrode for electrochemical element according to the present disclosure;

FIG. 9 is a schematic diagram illustrating an example of a device (liquid discharging device) for manufacturing an insulating resin layer to execute the method of manufacturing the electrode laminate according to the present disclosure;

FIG. 10 is a schematic diagram illustrating an example of a device (liquid discharging device) for manufacturing an insulating resin layer to execute the method of manufacturing the electrode laminate according to the present disclosure;

FIG. 11 is a schematic diagram illustrating a method of manufacturing an electrode for electrochemical element according to the present disclosure;

FIG. 12 is a schematic diagram illustrating an example of a device (liquid discharging device) for manufacturing an insulating resin layer to execute the method of manufacturing the electrode laminate according to the present disclosure;

FIG. 13 is a diagram illustrating a configuration of an example of the printing unit employing an inkjet method and transfer method as the liquid composition applying device in a device for manufacturing insulating resin layers according to the present disclosure;

FIG. 14 is a diagram illustrating a configuration of an example of the printing unit employing an inkjet method and transfer method as the liquid composition applying device in a device for manufacturing insulating resin layers according to the present disclosure;

FIG. 15 is a schematic diagram illustrating an electrochemical element according to the present disclosure;

FIG. 16 is a schematic diagram illustrating a solid state battery, which is an electrochemical element according to the present disclosure;

FIG. 17 is a schematic diagram illustrating a mobile object, which is an electrochemical element according to the present disclosure;

FIG. 18 is a schematic diagram illustrating a method of manufacturing a laminate according to the present disclosure;

and

FIG. 19 is another schematic diagram illustrating a method of manufacturing a laminate according to the present disclosure.

The accompanying drawings are intended to depict example embodiments of the present invention and should not be interpreted to limit the scope thereof. The accompanying drawings are not to be considered as drawn to scale unless explicitly noted. Also, identical or similar reference numerals and signs designate identical or similar components throughout the several views.

DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

The present disclosure is described in detail below with reference to accompanying drawings. In describing the present disclosure illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

The method of manufacturing an electrode of the present invention is made by the present inventors of the present invention based on the knowledge about issues of the following typical technologies.

In the conventional method of manufacturing an all-solid-state battery using a positive electrode for solid batteries, a positive electrode guide is placed on the outer peripheral part of the surface of the positive electrode composite layer facing the solid electrolyte layer to prevent short-circuiting between the positive and negative electrodes in the all-solid-state battery, which is done before performing stacking and pressing.

However, a very high pressure is applied during the production of the all-solid-state battery, which still causes issues such as cracks in the positive electrode guide and pressure load on the electrodes, resulting in damage to the electrodes and the solid electrolyte layer due to the pressure load.

The positive electrode guide is preferably made of resin, as it requires a certain degree of viscoelasticity to withstand pressing. Considering productivity and the shape diversity of the electrode composite layer, it is preferable to apply a liquid composition using a coater to form the coating film. A method of manufacturing electrodes by forming an electrode composite layer on an electrode substrate has been proposed in Japanese Unexamined Patent Application Publication No. 2019-61943. This method involves having a resin layer adhering to at least one of the peripheral areas of the electrode composite layer and the surface of the electrode composite layer in the direction along the plane of the electrode substrate. However, Japanese Unexamined Patent Application Publication No. 2019-61943 mentioned above does not disclose that the insulating resin layer is made from a liquid composition.

Additionally, a method of enhancing productivity has been proposed which includes simultaneously coating an insulating resin layer parallel to the outside of the positive electrode composite layer and the electrode composite layer. However, Japanese Unexamined Patent Application Publication No. 2019-61943 mentioned above does not describe forming an insulating resin layer with a thickness required for an electrode composite layer guide.

In recent years, the inkjet method has gathered attention as an industrial coater due to its ability to handle small quantities and precise pattern coating while minimizing material loss. Moreover, it allows for precise pattern coating directly from CAD data, obviating the need for plate making (mask). Additionally, inkjet printing offers high uniformity in film thickness, high-precision discharging, and the capability for selective coating, enabling irregular coatings, fine wiring, and the wiring drawing of small pieces. As a result, it is expected to form resin-based electrode composite layer guides using photocurable liquid compositions.

Photocurable liquid compositions are often made of photoinitiators and acrylic-based multifunctional monomers. In the case of curing with such multifunctional monomers, numerous monomers polymerize into a single molecule, resulting in volume shrinkage (hereinafter referred to as "curing shrinkage") due to the gap from van der Waals distance to covalent bond distance. This polymerization often causes phenomena such as curling and peeling from the substrate.

If an insulating resin layer is formed by applying and curing a liquid composition as an electrode composite layer guide, the electrode composite layer is thicker compared with the electrode substrate (current collector foil) from the perspective of battery energy density, inevitably thickening the insulating resin layer as well. Therefore, the impact of

curing shrinkage of the insulating resin layer is significant, and the curling of the electrode substrate becomes particularly noticeable. Consequently, handling in pressing and lamination processes becomes difficult, leading to issues such as cracks in the guide during pressing and
delamination between the active material and the insulating resin layer during lamination causing short circuits. These issues ultimately result in poor yield and reduced productivity.

The present disclosure is described in detail below.

Method of Manufacturing Electrode and Apparatus for Manufacturing Electrode

The method of manufacturing an electrode of the present disclosure includes forming an insulating resin layer, forming an electrode composite layer, removing the first solvent and the second solvent simultaneously, and other optional processes.

The apparatus for manufacturing an electrode of the present disclosure includes a storage container, a device for forming an insulating resin layer, a device for forming an electrode composite layer, a device for removing the first solvent and the second solvent simultaneously, and other optional devices.

FIG. 18 is a schematic diagram illustrating the method of manufacturing a laminate according to the present disclosure. The method of manufacturing the electrode of the present disclosure includes forming an insulating resin layer (S1), forming an electrode composite layer (S2), and removing (S3).

FIG. 19 is another schematic diagram illustrating the method of manufacturing a laminate according to the present disclosure. The method of manufacturing the electrode of the present disclosure may include forming an insulating resin layer (S1), forming an electrode composite layer (S2), removing (S3), pressing (S4), and forming a solid electrolyte layer (S5).

Each process and device are detailed below.

Process of Forming Insulating Resin Layer and Device for Forming Insulating Resin Layer

The process of forming an insulating resin layer includes applying an insulating resin layer forming liquid composition (first liquid composition), which contains a first solvent and a polymerizable compound, to a substrate to form an insulating resin layer thereon. The process of forming an insulating resin layer preferably includes a liquid composition applying process and a liquid composition curing process.

The device for forming an insulating resin layer includes a device for applying the first liquid composition, which contains the first solvent and the polymerizable compound, onto a substrate and forming the insulating resin layer thereon. The device for forming an insulating resin layer preferably includes a liquid composition applying device and a liquid composition curing device.

The process of forming an insulating resin layer can be suitably carried out by the device for forming an insulating resin layer, the liquid composition applying process can be suitably carried out by the liquid composition applying device, and the liquid composition curing process can be suitably carried out by the liquid composition curing device.

Process of Applying Liquid Composition and Device for Applying Liquid Composition

The liquid composition applying process includes applying the first liquid composition, which contains the first solvent and the polymerizable compound, to a substrate to form an insulating resin layer.

The liquid composition applying device applies the liquid composition accommodated in the storage container to a substrate.

The process of applying a liquid composition and the device for applying a liquid composition are not particularly limited and can be suitably selected to suit to a particular application. For example, the spin coating method, the casting method, the micro gravure coating method, the gravure coating method, the bar coating method, the roll coating method, the wire bar coating method, the dip coating method, the slit coating method, the capillary coating method, the spray coating method, the nozzle coating method, the gravure printing method, the screen printing method, the flexographic printing method, the offset printing method, the reverse printing method, and the inkjet printing method can be executed by their corresponding printing devices. Of these, inkjet printing is preferable to form an insulating resin layer with precision.

Storage Container

The storage container includes a liquid composition for forming an insulating resin layer to form an insulating resin layer and a vessel containing the liquid composition.

Specific examples of the vessel include, but are not limited to, a glass bottle, a plastic vessel, a plastic bottle, a stainless steel bottle, a 18-liter drum, and a drum.

Liquid Composition for Forming Insulating Resin Layer

The liquid composition (first liquid composition) for forming an insulating resin layer contains the first solvent mentioned above and the polymerizable compound mentioned above, and other optional components.

First Solvent

Specific examples of the first solvent include, but are not limited to, aromatic hydrocarbons such as toluene, xylene, mesitylene, anisole, and phenetole; hydrocarbon solvents such as hexane, heptane, nonane, octane, decane, menthane, cyclohexane, cyclooctane, and p-menthane; ester solvents such as ethyl butyrate, ethyl valerate, ethyl caproate, ethyl heptanoate, ethyl octanoate, ethyl nonanoate, ethyl decanoate, ethyl undecanoate, ethyl laurate, methyl butyrate, methyl valerate, methyl caproate, methyl heptanoate, methyl octanoate, methyl nonanoate, methyl decanoate, methyl undecanoate, methyl laurate, ethyl isovalerate, isoamyl acetate, isobutyl isobutyrate, 3-methoxyisobutyric acid methyl ester, butyl isobutyrate, isobutyl isovalerate, 2-methylbutyl isobutyrate, butyl isovalerate, heptyl acetate, isoamyl isovalerate, 2-ethylhexyl acetate, hexyl butyrate, ethyl benzoate, hexyl caproate, n-amyl octanoate, and hexyl acetate; and petroleum-based solvent mixtures.

Specific examples of the petroleum-based solvent mixtures include, but are not limited to, products sold under the trade names ISOPAR E, ISOPAR G, ISOPAR H, ISOPAR H BHT, ISOPAR L, ISOPAR M, EXXSOL D40, EXXSOL D80, EXXSOLD110, EXXSOL D130, EXXSOL DSP 80/100, and EXXSOL DSP 145/60 (all available from ANDOH PARACHEMIE CO., LTD.).

The content of the solvent is not particularly restricted and can be appropriately selected according to the purpose. From the viewpoint of curl development reduction, the solvent is at least 30 percent by mass of the total amount of the liquid composition, more preferably at least 40 percent by mass, and even more preferably at least 50 percent by mass. Additionally, the solvent content is preferably 70 or more percent by mass to control the film thickness.

The solvent in the present disclosure may be a combination of multiple solvents to increase the diversity of polymerizable compound selection.

As one aspect of the first liquid composition in the present disclosure, the solvent in the liquid composition is a solvent mixture containing both good and poor solvents to minimize curling due to volume shrinkage, and satisfies the following Formula 1.

$$\text{Polymerizable compound soluble point} \leq \text{Mixing ratio X} < \text{Polymerizable compound soluble point} + 11 \qquad \text{Relationship 1}$$

In the present specification, "good solvent" refers to a solvent in which the polymerizable compound is soluble. In the present specification, "poor solvent" refers to a solvent which leaves the polymerizable compound undissolved. Furthermore, in the present specification, "solvent mixture" refers to a solvent that contains both good and poor solvents.

In this specification, "mixing ratio X" refers to the percentage-based content ratio of the good solvent in a solvent mixture by mass in the solvent mixture.

In this specification, "polymerizable compound soluble point" refers to the minimum content ratio by mass of the good solvent in a solvent mixture in which the polymerizable compound is soluble, expressed as a percentage.

The term "soluble" in the first aspect is explained below. "Soluble" refers to the property where, after mixing the solvent and the polymerizable compound followed by ultrasonic stirring for 15 minutes with an ultrasonic stirrer (USS-1), no turbidity or phase separation occurs after standing for 10 minutes at a specified temperature. The specified temperature is not particularly limited as long as it is the ambient temperature during actual use. For example, it includes 25 degrees Celsius.

The determination of solubility or insolubility is made according to the composition of the liquid composition. For example, the following patterns 1 to 5 can be considered.

Pattern 1

For a liquid composition containing two types of polymerizable compounds (compound mixture) represented by Chemical Formula 1 and one type of solvent, the solubility is determined using a mixture of 10 g of the solvent and 1 g of the compound mixture (monomer ratio or mass ratio in the liquid composition).

Pattern 2

For a liquid composition containing one type of polymerizable compound represented by Chemical Formula 1,

one type of polymerizable compound not satisfying Chemical Formula 1, and one type of solvent, the solubility is determined using a mixture of 10 g of the solvent and 1 g of a mixture of the polymerizable compound represented by Chemical Formula 1 and the polymerizable compound not satisfying Chemical Formula 1 (monomer ratio or mass ratio in the liquid composition).

Pattern 3

For a liquid composition containing one type of polymerizable compound represented by Chemical Formula 1 and two types of solvents (solvent mixture), the solubility is determined using a mixture of 10 g of solvent mixtures (monomer ratio or mass ratio in the liquid composition) and 1 g of the polymerizable compound represented by Chemical Formula 1.

Pattern 4

For a liquid composition containing two types of polymerizable compounds (compound mixture) represented by Chemical Formula 1 and two types of solvents (solvent mixture), the solubility is determined using a mixture of 10 g of solvent mixtures (monomer ratio or mass ratio in the liquid composition) and 1 g of the compound mixture (monomer ratio or mass ratio in the liquid composition).

Pattern 5

For a liquid composition containing two types of polymerizable compounds (compound mixture) represented by Chemical Formula 1, one type of polymerizable compound not satisfying Chemical Formula 1, and two types of solvents (solvent mixtures), the solubility is determined using a mixture of 10 g of solvent mixtures (monomer ratio or mass ratio in the liquid composition) and 1 g of a mixture of the compound mixture and the polymerizable compound not satisfying Chemical Formula 1 (monomer ratio or mass ratio in the liquid composition).

Relationship 1 can also be transformed into Relationship 1'.

$$0 \leq \text{Mixing ratio X - Polymerizable compound soluble point} \leq 11 \qquad \text{Relationship 1'.}$$

The liquid composition of this aspect can form a resin layer with high porosity based on the phase separation rate under Relationship 1 or Relationship 1'. As a result, it is possible to suppress volume shrinkage during the curing of the liquid composition, thereby forming a high-quality resin layer.

Furthermore, as the "mixing ratio X - polymerizable compound solubility point" in Relationship 1' approaches zero, the curling due to volume shrinkage can be further reduced.

As a second aspect of the first liquid composition in the present disclosure, the polymerizable compound in the liquid composition is a mixed solvent containing both a soluble polymerizable compound and an insoluble polymerizable compound to suppress curling due to volume shrinkage, and satisfies the following Relationship 2.

$$\text{Solvent soluble point} \leq \text{Mixing ratio Y} < \text{Solvent soluble point} + 21 \qquad \text{Relationship 2}$$

Polymerizable Compound

The polymerizable compound in the present disclosure is represented by Chemical Formula 1 and contains multiple units of mono-substituted ethylene, 1,1-disubstituted ethylene, 1,2-disubstituted ethylene, and/or diene compounds, which can be radically polymerized.

Furthermore, each of these polymerizable compounds is preferably a cross-linked resin formed through a cross-linking reaction.

The cross-linking reaction is not particularly limited and can be appropriately selected according to the intended purpose; however, the reaction is preferably conducted by photopolymerization.

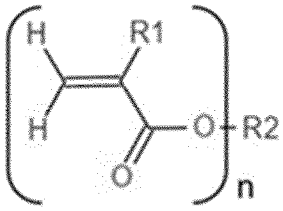

Chemical Formula 1

In Chemical Formula 1, R1 represents a hydrogen atom or a methyl group, R2 represents a hydrocarbon chain, an alkylene oxide chain, hydroxy pivalic acid neopentyl glycol, a polyester chain, or an acrylic polymer ester derivative, and n represents an integer from 2 to 6.

n in Chemical Formula 1 is preferably 2 or 3, and more preferably 2 to reduce curling that occurs during the curing of the liquid composition.

As for R2 in Chemical Formula 1, it is preferably a polyester chain, and more preferably a polycaprolactone chain to achieve a more excellent curl suppression effect.

As for the polymerizable compound, from the perspective of polymerization rate, it preferably has an acrylic group, that is, R1 in Chemical Formula 1 is preferably a hydrogen atom.

In general, acrylic groups have high radical polymerizability, allowing for the rapid formation of cured products in liquid compositions by using a photopolymerization initiator or a thermal polymerization initiator. Cured products can be obtained without the use of polymerization initiators. However, in the case of a polymerizable compound with an acrylic group (i.e., R1 in Chemical Formula 1 is a hydrogen atom), it is preferable from the perspective of polymerization rate and equipment cost to use the polymerizable compound in combination with a thermal polymerization initiator or a photopolymerization initiator in the liquid composition, and it is even more preferable to use the polymerizable compound in combination with a photopolymerization initiator.

Specific examples of the polymerizable compounds include, but are not limited to, difunctional alkyl acrylates, hydroxy pivalic acid neopentyl glycol acrylate adducts, difunctional polyethylene glycol acrylates, difunctional polypropylene glycol acrylates, difunctional polytetramethylene glycol acrylates, difunctional cyclic acrylates, difunctional alkoxylated aromatic acrylates, difunctional acrylic acid polymer ester acrylates, difunctional caprolactam-modified acrylates, trifunctional trimethylolpropane acrylates, trifunctional alkoxylated glycerin acrylates, trifunctional isocyanate acrylates, tetrafunctional pentaerythritol acrylates, tetrafunctional ditrimethylolpropane acrylates, tetrafunctional diglycerin tetraacrylates, hexafunctional dipentaerythritol hexaacrylates, and polyester acrylates.

Among these, from the perspective of volume shrinkage, difunctional alkyl acrylates, difunctional polyethylene glycol acrylates, difunctional alkoxylated aromatic acrylates, difunctional acrylic acid polymer ester acrylates, trifunctional trimethylolpropane acrylates, trifunctional alkoxylated glycerin acrylates, and trifunctional isocyanate acrylates are more preferable.

Moreover, among difunctional alkyl acrylates, difunctional polyethylene glycol acrylates, difunctional alkoxylated aromatic acrylates, and difunctional acrylic acid polymer ester acrylates, difunctional polyethylene glycol acrylates, difunctional acrylic acid polymer ester acrylates, and difunctional polyester acrylates are more preferable.

Specific examples of the difunctional alkyl acrylates include, but are not limited to, those sold under the trade names NK Ester A-HD-N, A-NON-N, A-DOD-N, and A-NPG (all available from Shin-Nakamura Chemical Co., Ltd.), Light Acrylate NP-A, MPD-A, 1,6HX-A, and 1,9ND-A (all available from Kyoeisha Chemical Co., Ltd.), and KAYARAD NPGDA (available from Nippon Kayaku Co., Ltd.).

Specific examples of the hydroxy pivalic acid neopentyl glycol acrylate adducts include, but are not limited to, those sold under the trade names Light Acrylate HPP-A (available from Kyoeisha Chemical Co., Ltd.), Biscoat #195, Biscoat #230, and Biscoat #260 (all available from OSAKA ORAGANIC CHEMICAL INDUSTRY LTD.), Miramer M210 and Miramer M216 (both available from Miwon Speciality Chemical Co., Ltd.), and KAYARAD FM-400 (available from Nippon Kayaku Co., Ltd.).

Specific examples of the difunctional polyethylene glycol acrylates include, but are not limited to, those sold under the trade names NK Ester A-200, NK Ester A-400, NK Ester A-600, and NK Ester A-1000 (all available from Shin Nakamura Chemical Co., Ltd.), Light Acrylate 3EG-A, Light Acrylate 4EG-A, Light Acrylate 9EG-A, and Light Acrylate 14EG-A (all available from Kyoeisha Chemical Co., Ltd.), Brenmar ADE-200, Brenmar ADE-300, and Brenmar ADE-400A (all available from NOF Corporation), and Miramer M202 (available from Miwon Speciality Chemical Co., Ltd.).

Specific examples of the difunctional polypropylene glycol acrylates include, but are not limited to, those sold under the trade names NK Ester APG-200, NK Ester APG-400, and NK Ester APG-700 (all available from Shin Nakamura Chemical Co., Ltd.), Biscoat #310HP (available from OSAKA ORAGANIC CHEMICAL INDUSTRY LTD.), Brenmar ADP-400 (available from NOF Corporation), and Miramer M210, Miramer M216, and Miramer M220 (all available from Miwon Speciality Chemical Co., Ltd.).

Specific examples of the difunctional polytetramethylene glycol acrylates include, but are not limited to, those sold under the trade names NK Ester A-PTMG65 (available from Shin Nakamura Chemical Co., Ltd.), Light Acrylate PTMGA-250 (available from Kyoeisha Chemical Co., Ltd.), and Brenmar ADT-250 (available from NOF Corporation).

Specific examples of the difunctional cyclic acrylates include, but are not limited to, those sold under the trade names NK Ester A-DCP (available from Shin Nakamura Chemical Co., Ltd.), Light Acrylate DCP-A (available from Kyoeisha Chemical Co., Ltd.), and KAYARAD R-604 and KAYARAD R-684 (both available from Nippon Kayaku Co., Ltd.).

Specific examples of the difunctional alkoxylated aromatic acrylates include, but are not limited to, those sold under the trade names NK Ester ABE-300, A-BPE-4, A-BPE-10, and A-BPE-20 (all available from Shin Nakamura Chemical Co., Ltd.), Light Acrylate BP-4EAL, BA-134, and BP-10EA (all available from Kyoeisha Chemical Co., Ltd.), Biscoat #540 (available from Osaka Organic Chemical Industry Ltd.), and KAYARAD R-551 and KAYARAD R-712 (both available from Nippon Kayaku Co., Ltd.).

A specific example of the difunctional acrylic acid polymer ester acrylate is Biscoat #230D (available from Osaka Organic Chemical Industry Ltd.).

Specific examples of the difunctional caprolactam-modified acrylates include, but are not limited to, those sold under the trade names KAYARAD HX-220 and KAYARAD HX-620 (both available from Nippon Kayaku Co., Ltd.).

Specific examples of the trifunctional trimethylolpropane acrylates include, but are not limited to, those sold under the trade names NK Ester A-TMPT, A-TMPT-9EO, and AT-20E (all available from Shin Nakamura Chemical Co., Ltd.), Light Acrylate TMP-3EO-A and Light Acrylate TMP-6EO-3A (both available from Kyoeisha Chemical Co., Ltd.), and Biscoat #295 (available from Osaka Organic Chemical Industry Ltd.).

Specific examples of the trifunctional alkoxylated glycerin acrylates include, but are not limited to, those sold under the trade names NK Ester A-GLY-3E, A-GLY-9E, and A-GLY-20E (all available from Shin Nakamura Chemical Co., Ltd.).

Specific examples of the trifunctional isocyanate acrylates include, but are not limited to, those sold under the trade names NK Ester A-9300 and A-9200YN (both available from Shin Nakamura Chemical Co., Ltd.).

Specific examples of the tetrafunctional pentaerythritol acrylates include, but are not limited to, those sold under the trade names NK Ester A-TMMT and ATM-35E (both available from Shin Nakamura Chemical Co., Ltd.) and Light Acrylate PE-3A and Light Acrylate PE-4A (both available from Kyoeisha Chemical Co., Ltd.).

A specific example of the tetrafunctional ditrimethylolpropane acrylate is NK Ester AD-TMP (available from Shin Nakamura Chemical Co., Ltd.).

A specific example of the tetrafunctional diglycerin tetraacrylate is Light Acrylate DGE-4E (available from Kyoeisha Chemical Co., Ltd.).

A specific example of the hexafunctional dipentaerythritol hexaacrylate is Light Acrylate DPE-6A (available from Kyoeisha Chemical Co., Ltd.).

Specific examples of the polyester acrylates include, but are not limited to, those sold under the trade names Aronix M-6100, Aronix M-6200, Aronix M-6250, Aronix M-6500, Aronix M-7100, Aronix M-8030, Aronix M-8060, Aronix M-8100, Aronix M-8530, Aronix M-8560, and Aronix M-9050 (all available from Toagosei Co., Ltd.), Ebecryl 81, Ebecryl 88, Ebecryl 80, Ebecryl 657, Ebecryl 1657, Ebecryl 800, Ebecryl 805, Ebecryl 808, Ebecryl 810, Ebecryl 1810, Ebecryl 450, Ebecryl 1830, Ebecryl 1870, Ebecryl 2870, Ebecryl 830, Ebecryl 835, Ebecryl 870, Ebecryl 84, and IRR 302 (all available from Daicel-Ornex Co., Ltd.), RCC13-429 (available from Sannopco Co., Ltd.), Diabeam UK-4003 and Diabeam UK-4203 (both available from Mitsubishi Chemical Corporation), CN2203, CN2270, CN2271, CN2273, and CN2274 (all available from Arkema Co., Ltd.), and KAYARAD HX-220 and KAYARAD HX-620 (both available from Nippon Kayaku Co., Ltd.).

As the polymerizable compound, it is sufficient to contain at least one polymerizable compound represented by Chemical Formula 1. The polymerizable compound contained in the liquid composition may be composed of only the polymerizable compound represented by Chemical Formula 1, or it may contain two or more different polymerizable compounds represented by Chemical Formula 1. In either case, the polymerizable compound may contain polymerizable compounds that do not meet Chemical Formula 1, in addition to the polymerizable compounds represented by Chemical Formula 1.

Preferably, the liquid composition in the present disclosure contains no polymerizable compounds that do not meet Chemical Formula 1 to minimize the deterioration of the sulfide solid electrolyte. Furthermore, the liquid composition preferably contains two or more different polymerizable compounds represented by Chemical Formula 1 to expand the controllable range of the physical properties (for example, elastic modulus) of the insulating resin layer.

As for the polymerizable compound, it is sufficient to contain at least one polymerizable compound that satisfies the conditions described in Chemical Formula 2. The polymerizable compound in the liquid composition may be composed of only one polymerizable compound that satisfies the conditions described in Chemical Formula 2, or it may have two or more different polymerizable compounds that satisfy the conditions described in Chemical Formula 2. In either case, the polymerizable compound may contain polymerizable compounds that do not meet the conditions described in Chemical Formula 2, in addition to the polymerizable compounds that meet the conditions described in Chemical Formula 2.

Preferably, the liquid composition does not contain polymerizable compounds that do not satisfy the conditions

described in Chemical Formula 2 to minimize the deterioration of the sulfide solid electrolyte.

Furthermore, the liquid composition preferably contains two or more different polymerizable compounds that meet the conditions described in Chemical Formula 2 to expand the controllable range of the physical properties (for example, elastic modulus) of the insulating resin layer.

There are no particular limitations on the photopolymerization initiator, and it can be selected as appropriate according to the purpose. Examples include, but are not limited to, alkylphenone-based polymerization initiators, acylphosphine sulfite-based polymerization initiators, and oxime ester-based polymerization initiators.

Specific examples of alkylphenone-based polymerization initiators include, but are not limited to, products such as Omnirad 651, Omnirad 184, Omnirad 1173, Omnirad 2959, Omnirad 127, Omnirad 907, Omnirad 369, Omnirad 369E, and Omnirad 379EG (all available from IGM Resins B.V).

Specific examples of acylphosphine sulfite-based polymerization initiators include, but are not limited to, products such as Omnirad TPO and Omnirad 819 (both available from IGM Resins B.V).

Specific examples of oxime ester-based polymerization initiators include, but are not limited to, products such as Irgacure OXE01, Irgacure OXE02, Irgacure OXE03, and Irgacure OXE04 (all available from BASF Japan).

The proportion of the polymerization initiator is not particularly limited and can be suitably selected to suit to a particular application. The content is preferably 0.05 to 10.0 percent by mass, and more preferably 0.1 to 5.0 percent by mass, of the total polymerizable compound to achieve a sufficient curing rate.

Non-crosslinked Resin

The non-crosslinked resin in the present disclosure has structural units represented by Chemical Formula 2. In other words, the non-crosslinked resin in the present disclosure is a non-crosslinked polymer compound containing an acrylic monomer having an acrylate ester group as a structural unit.

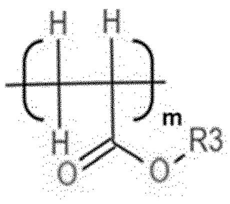

Chemical Formula 2

In Chemical Formula 2, R3 represents an alkyl group.

The term 'non-crosslinked polymer compound' refers to a polymer compound that lacks a three-dimensional network structure due to cross-linking. It excludes branched polymers, graft polymers, and dendrimers, which do not possess a network structure.

There are no particular restrictions on the value of m in the structural unit represented by Chemical Formula 2; it can be selected based on the purpose. Preferably, the value should be between 100 and 100,000, and more preferably between 1,000 and 100,000, to control the viscosity of the liquid composition.

There are no particular restrictions on R3 in the structural unit represented by Chemical Formula 2 as long as it is an alkyl group, and it can be appropriately selected according to the purpose. R3 is preferably methyl, ethyl, iso-propyl, n-propyl, tert-butyl, iso-butyl, or n-butyl to increase the glass transition point. If R3 in the structural unit represented by Chemical Formula 2 has these structures, the glass transition point will not drop below room temperature, resulting in the formation of a solid resin layer. The solid resin layer obtained can maintain its shape even during processes such as compression in the manufacturing of electrochemical devices because it has sufficient strength, and it can also prevent peeling from the substrate.

It is sufficient if the non-crosslinked resin includes at least one type of the structural unit represented by Chemical Formula 2. The non-crosslinked resin contained in the liquid composition may include only the structural unit represented by Chemical Formula 2, or it may include two or more different structural units represented by Chemical Formula 2. In either case, the non-crosslinked resin may also contain other structural units that do not satisfy Chemical Formula 2 in addition to the structural units represented by Chemical Formula 2.

In the present disclosure, the non-crosslinked resin is preferably a copolymer consisting of two or more structural units, to increase the glass transition temperature. In other words, in the present disclosure, the non-crosslinked resin is preferably a copolymer containing a first structural unit represented by Chemical Formula 2 and another structural unit different from the first structural unit represented by Chemical Formula 2. If the non-crosslinked resin contains two or more structural units, the glass transition point does not become lower than room temperature, allowing for the formation of a solid resin layer. The solid resin layer obtained can maintain its shape even during processes such as compression in the manufacturing of electrochemical devices because it has sufficient strength, and it can also prevent peeling from the

substrate.

There are no particular restrictions on the other structural units, and they can be appropriately selected according to the purpose. For example, the other structural units may include those that satisfy Chemical Formula 2 but differ from the first structural unit represented by Chemical Formula 2 or those that do not satisfy Chemical Formula 2. The latter is preferable for controlling the glass transition temperature and is preferably represented by Chemical Formula 3 to achieve an excellent curl suppression effect due to volume shrinkage.

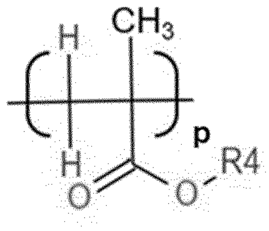

Chemical Formula 3

In Chemical Formula 3, R4 represents methyl, ethyl, iso-propyl, n-propyl, tert-butyl, iso-butyl, or n-butyl.

There are no particular restrictions on the value of p in the structural unit represented by Chemical Formula 3; it can be selected based on the purpose. Preferably, the value should be between 100 and 100,000, and more preferably between 1,000 and 100,000, to control the viscosity of the liquid composition.

In the present disclosure, the copolymer related to the non-crosslinked resin is preferably a block copolymer to minimize curl caused by volume shrinkage.

There are no particular restrictions on the method of obtaining the block copolymer, and it can be appropriately selected according to the purpose. Specific examples include, but are not limited to, anionic polymerization (including coordination anionic polymerization), cationic polymerization, radical polymerization (including atom transfer radical polymerization and reversible addition-fragmentation chain transfer polymerization), ring-opening metathesis polymerization, and methods for stepwise preparation of block polymers using polycondensation or addition reactions to terminal diols or diamine polymers.

The copolymer related to the non-crosslinked resin in the present disclosure can be either synthesized or procured commercially. Specific examples of the products include, but are not limited to, Clarity LA4285, Clarity LA2270, Clarity LA2250, Clarity LA2140, Clarity LA2330, Clarity LA3320, Clarity LA3710, and Clarity LK9243 (all available from Kuraray Co., Ltd.).

The weight average molecular weight Mw of the non-crosslinked resin in the present disclosure is not particularly restricted and can be appropriately selected according to the intended purpose. It is preferably 5,000 or more in terms of stickiness.

Process of Curing Liquid Composition and Device for Curing Liquid Composition

The process of curing a liquid composition involves applying heat or light to the liquid composition to cure it.

The device for curing a liquid composition applies heat or light to the liquid composition to cure it.

By applying heat or light to the liquid composition, the polymerizable compound within the liquid composition undergo polymerization and polymerization-inducing phase separation, resulting in an insulating resin layer with a porous structure.

The light used in the process of curing a liquid composition and the device for curing a liquid composition is preferably an actinic ray.

This ray may include any type of actinic radiation that can provide the energy necessary to promote the polymerization reaction of the polymerizable compounds in the liquid composition and is not particularly limited. Examples include, but are not limited to, ultraviolet (UV) rays, electron beams, alpha rays, beta rays, gamma rays, and X-rays. Among these, ultraviolet rays are preferred. Note that in the case of using a particularly high-energy light source, polymerization reactions can be facilitated even without the use of a polymerization initiator.

There are no particular restrictions on the irradiation intensity of the actinic rays, and it can be appropriately selected according to the intended purpose. It is preferably at most 1 $W/cm^2$, more preferably at most 300 $mW/cm^2$, and even more preferably at most 100 $mW/cm^2$.

An excessively low irradiation intensity of the actinic rays can lead to excessive progression of polymerization-induced phase separation, causing variations and coarsening of the porous structure, and longer irradiation times may reduce productivity. Therefore, it is preferably at least 10 $mW/cm^2$, and more preferably at least 30 $mW/cm^2$.

## Insulating Resin Layer

The insulating resin layer of the present disclosure is formed by curing a liquid composition for forming the insulating resin layer and has a porous structure.

Such an insulating resin layer with a porous structure is unlikely to experience residual stress due to volume shrinkage, which helps to minimize curling. This structure is particularly effective for forming an insulating resin layer with an average thickness of at least 100 μm.

The porous structure is preferably a co-continuous structure with a framework formed of a resin.

The term "co-continuous structure" refers to a structure in which two or more materials or phases each have a continuous structure and do not form an interface. In the present embodiment, it refers to a structure where both the resin phase and the void phase are three-dimensional, branched, networked continuous phases.

These structures can be formed through polymerization-induced phase separation (for example, see Japanese Unexamined Patent Application Publication No. 2003-1911628, WO 97/044363 A1, Japanese Unexamined Patent Application Publication No. 2005-298757, Japanese Examined Patent Application Publication No. 2010-513589, Japanese Unexamined Patent Application Publication No. 2001-163907, and Japanese Unexamined Patent Application Publication No. 2001-138504).

## Polymerization-induced Phase Separation

The term "polymerization-induced phase separation" refers to the state in which, before polymerization begins, the polymerizable compound and the solvent are mutually soluble, but after the polymerization starts, the resulting polymer (resin) and the solvent become insoluble, leading to phase separation. Although there are other methods of obtaining a porous structure through phase separation, the co-continuous porous structure obtained through polymerization-induced phase separation has the advantage of high resistance to chemicals and heat. Additionally, compared to other methods, it offers the benefits of a shorter process time and easier surface modification.

Next, the process for forming a porous structure using polymerization-induced phase separation with a liquid composition containing a polymerizable compound will be explained. The polymerizable compound undergoes a polymerization reaction upon exposure to light or other stimuli to form a resin. During this process, solubility of the growing resin in the solvent decreases. As a consequence, phase separation occurs between the resin and the solvent. Eventually, the resin forms a co-continuous porous structure where the solvent or other materials fill the pores, with the resin forming the skeletal framework. Upon drying, the solvent is removed, leaving behind a porous resin with a three-dimensional networked co-continuous structure.

Considering this polymerization-induced phase separation, the liquid composition, as a preferred form of ink, contains a mixture of a polymerizable compound (monomer) and a solvent, where the resin formed after polymerization is insoluble in the solvent or does not form a gel or sol.

As a method to confirm that the insulating resin layer has a co-continuous structure with continuous pores, for example, one could use scanning electron microscopy (SEM) to observe the cross-section of the insulating resin layer and verify the continuity of the connections between the pores.

## Example of Image Observation Method Using Scanning Electron Microscopy (SEM)

First, the insulating resin layer is osmium stained and then subjected to vacuum impregnation with epoxy resin. The internal cross-section structure is then cut out using a focused ion beam (FIB) and observed using a scanning electron microscope (SEM).

There are no particular restrictions on the porosity of the insulating resin layer, and it can be appropriately selected according to the purpose, A porosity of 30 or more percent is preferred, and 50 or more percent is even more preferable. Additionally, a porosity of at most 90 percent is preferred, and at most 85 percent is even more preferable.

A porosity of at least 30 percent in the insulating resin layer is preferred, as it helps to alleviate the pressure on the solid electrolyte layer from the insulating resin layer during the pressing process after the formation of the solid electrolyte layer.

A porosity of at most 90 percent is desirable for the insulating resin layer to enhance its strength, ensuring adequate shape retention after the pressing process.

The porosity of the insulating resin layer can be measured using the method described in the section "Example of Image Observation Method Using Scanning Electron Microscopy (SEM)."

The air permeability of the insulating resin layer is not particularly limited and can be appropriately selected according to the purpose. Preferably, it is not more than 1,000 seconds/100 mL, more preferably not more than 500 seconds/100 mL, and even more preferably not more than 300 seconds/100 mL.

Air permeability is measured in accordance with JIS P8117 (Paper and board-Determination of air permeance

and air resistance (medium range)-Gurley method) and can be measured using, for example, a Gurley densometer (available from Toyo Seiki Seisaku-Sho, Ltd.). As one example, it may be determined that the pores are interconnected or continuous if the air permeability is not more than 1,000 seconds/100 mLs.

The cross-sectional shape of the pores in the insulating resin layer is not particularly limited and can be appropriately selected according to the purpose. Examples include, but are not limited to, substantially circular, elliptical, or polygonal shapes. The size of the pores refers to the length of the longest part of the cross-sectional shape in the insulating resin layer. The size of the pores in the insulating resin layer can be determined, for example, from cross-section images taken using a scanning electron microscope (SEM).

The size of the pores in the insulating resin layer is not particularly limited and can be appropriately selected according to the purpose. Preferably, the ratio of the pore size to the median diameter of the solid electrolyte contained in the liquid composition for forming the solid electrolyte layer (liquid composition for solid electrolyte layer) applied on the insulating resin layer is less than 1, and more preferably 0.8 or less.

If the pore size in the insulating resin layer is larger than the median diameter of the solid electrolyte, the solid electrolyte is more likely to become trapped within the pores of the insulating resin layer. An insulating resin layer with a pore size smaller than the median diameter of the solid electrolyte can form a structure that minimizes the inclusion of the solid electrolyte within the insulating resin layer. This structure is advantageous for pressure distribution during pressing and for alleviating the pressure exerted by the insulating resin layer on the solid electrolyte layer.

There are no particular limitations on the methods of controlling the pore size and porosity of the insulating resin layer, and they can be appropriately selected according to the purpose. Examples include, but are not limited to, adjusting the content of the polymerizable compound in the liquid composition, adjusting the content of the solvent in the liquid composition, and adjusting the irradiation conditions of the actinic ray.

There are no particular limitations on the volume resistivity of the insulating resin layer, and it can be appropriately selected according to the purpose. It is preferable for the volume resistivity to be at least $10^{12}$ $\Omega\cdot$cm.

Electrode Composite Layer Forming Process and Electrode Composite Layer Forming Device

The electrode composite layer forming process involves applying a liquid composition for forming the electrode composite layer, which contains an active material and a second solvent, onto a substrate to form the electrode composite layer.

The electrode composite layer forming device applies a liquid composition for forming the electrode composite layer, which contains an active material and a second solvent, onto a substrate to form the electrode composite layer.

There are no particular limitations on the electrode composite layer forming process or device, and they can be appropriately selected according to the purpose. For example, one can use a method where a dispersion, obtained by dispersing substances such as powdery active materials, binders, and conductive materials in a liquid, is applied onto a substrate, fixed, and dried. In this process, application methods such as spraying, dispensing, die coating, or dip coating can be suitably employed.

Liquid Composition for Forming Electrode Composite Layer

The liquid composition for forming the electrode composite layer includes an active material and a second solvent, and may further optionally contain conductive assistants, a resin as binder, dispersants, solid electrolytes, and other components.

If the solid electrolyte layer is a sulfide solid electrolyte layer, the cured product (insulating resin layer) of the liquid composition of the present disclosure can minimize the degradation of the ion conductivity of the sulfide solid electrolyte layer. Therefore, it is preferable that the electrode composite layer in an electrode or laminar electrode for an electrochemical element contain the active material and the sulfide solid electrolyte.

Active Material

The active material can be either a positive electrode active material or a negative electrode active material. The positive electrode active material or negative electrode active material may be used alone or in combination of two or more.

There is no particular limitation on the positive electrode active material as long as it is a material capable of reversibly absorbing and releasing alkali metal ions. For example, alkali metal-containing transition metal compounds can be used as the positive electrode active materials.

Specific examples of alkali metal-containing transition metal compounds include, but are not limited to, lithium-containing transition metal compounds such as composite oxides containing lithium and one or more elements selected from the group consisting of cobalt, manganese, nickel, chromium, iron, and vanadium.

Specific examples of lithium-containing transition metal compounds include lithium cobalt oxide, lithium nickel

oxide, and lithium manganese oxide.

Alkali metal-containing transition metal compounds may also include polyanion compounds having an $XO_4$ tetrahedron (where X = element such as P, S, As, Mo, W, or Si) in their crystal structure. Of these, lithium-containing transition metal phosphate compounds such as lithium iron phosphate and lithium vanadium phosphate are preferable in terms of cyclability. Lithium vanadium phosphate is more preferable in terms of lithium diffusion coefficient and output properties.

As for the polyanion compounds, it is preferable that the surface is coated and compounded with conductive additives such as carbon materials to enhance electronic conductivity.

It is preferable for alkali metal-containing transition metal compounds to be at least partially coated with an ion-conductive oxide on their surface. As the ion-conductive oxide, lithium ion-conductive oxides are preferable.

There are no particular limitations on the selection of lithium ion-conductive oxides, which can be selected according to the purpose.

Specific examples include, but are not limited to, oxides represented by Chemical Formula $Li_xAO_y$ (where A represents B, C, Al, Si, P, S, Ti, Zr, Nb, Mo, Ta, Sc, V, Y, Ca, Sr, Ba, Hf, Ta, Cr, or W, and x and y are positive numbers).

Specific examples of lithium ion-conductive oxides include $Li_3BO_3$, $LiBO_2$, $Li_2CO_3$, $LiAlO_2$, $Li_4SiO_4$, $Li_2SiO_3$, $Li_3PO_4$, $Li_2SO_4$, $Li_2TiO_3$, $Li_4Ti_5O_{12}$, $Li_2Ti_2O_5$, $Li_2ZrO_3$, $LiNbO_3$, $LiTaO_3$, $Li_2MoO_4$, and $Li_2WO_4$. Among these, $Li_4Ti_5O_{12}$, $Li_2ZrO_3$, or $LiNbO_3$ is preferable.

Lithium ion-conductive oxides may also be composite oxides. Any combination of lithium ion-conductive oxides may be used as composite oxides, such as $Li_4SiO_4$-$Li_3BO_3$ and $Li_4SiO_4$-$Li_3PO_4$.

As for the negative electrode active material, there are no particular limitations as long as it is a material capable of reversibly absorbing and releasing alkali metal ions, and it can be appropriately selected according to a particular application.

For example, carbon materials containing graphite with a graphite-type crystalline structure can be used.

Examples of carbon materials include, but are not limited to, natural graphite, spherical or fibrous artificial graphite, hard carbon (non-graphitizable carbon), and soft carbon (easily graphitizable carbon).

In addition to carbon materials, examples of other materials include, but are not limited to, lithium titanate and titanium oxide.

High-capacity materials such as silicon, tin, silicon alloys, tin alloys, silicon oxide, silicon nitride, and tin oxide can also be suitably used as negative electrode active materials to increase the energy density of lithium-ion batteries.

Second Solvent

There are no particular restrictions on the second solvent (dispersing medium) as long as it can disperse the active material, and it can be appropriately selected according to the purpose.

Specific examples include, but are not limited to, aqueous dispersing media such as water, ethylene glycol, or propylene glycol; and organic dispersing media such as N-methyl-2-pyrrolidone, 2-pyrrolidone, cyclohexanone, ethyl lactate, butyl acetate, mesitylene, ethylene glycol monoethyl ether, ethylene glycol monobutyl ether, ethylene glycol monoethyl ether acetate, diethylene glycol monoethyl ether, diethylene glycol monobutyl ether, propylene glycol monomethyl ether, propylene glycol monoethyl ether, propylene glycol monobutyl ether, dibutyl ether, diethyl ether, di-tert-butyl ether, 2-n-butoxyethanol, 2-dimethyl ethanol, N,N-dimethylacetamide, anisole, diethoxyethane, normal hexane, heptane, octane, nonane, decane, and p-menthane. These can be used alone or in combination.

The boiling point of the aforementioned second solvent is not particularly limited and can be appropriately selected depending on the purpose. Preferably, the storage stability is at least 70 degrees C. If the second solvent with a boiling point of at least 70 degrees Celsius is stored at room temperature, precipitation due to the concentration from solvent evaporation does not easily occur, leading to excellent storage stability. Additionally, the boiling point of the second solvent is preferably not more than 210 degrees C in terms of battery characteristics. Furthermore, to avoid a significant difference in the removal rate between the first and second solvents during the removal process described later, it is preferable that the difference in boiling points between the first solvent and the second solvent be less than 40 degrees Celsius, and more preferably within 20 degrees Celsius. A large boiling point difference can cause the solvent to skew towards the lower boiling point solvent, leading to a deviation in component distribution, which may affect the characteristics of the resulting structure. The smaller the boiling point difference, the more effectively this skew can be minimized.

Moreover, the difference between the boiling points of the first and second solvents is not particularly restricted and can be appropriately selected according to the purpose. It is preferable that the difference is at most 40 degrees C. If the difference is at most 40 degrees C, both the first and second solvents can be removed simultaneously.

In the present disclosure, "simultaneous removal" refers to that two liquid films are placed in a drying device, and multiple solvents are removed simultaneously in a single drying process. It refers to drying a liquid film containing two or more types of solvents, and removing multiple solvents concurrently by evaporation, without selectively removing only a specific solvent. If the boiling point of the first solvent is at least 40 degrees Celsius lower than that of the second solvent,

the first solvent tends to be selectively removed during the solvent removal process, and as the solvent is removed from the resin, curling is likely to occur in the insulating resin layer. Additionally, it is assumed that issues with battery characteristics arise as the second solvent contained in the positive electrode diffuses towards the porous structure of the resin insulating layer near the interface between the insulating resin layer and the positive electrode, causing the composition to become imbalanced. On the other hand, the second solvent tends to be selectively removed during the solvent removal process if the boiling point of the first solvent is at least 40 degrees Celsius higher than that of the second solvent. This causes the first solvent contained in the insulating resin layer to diffuse toward the positive electrode side near the interface between the insulating resin layer and the positive electrode, resulting in the imbalance of components such as the active material, binder, dispersant, and solid electrolyte, which is assumed to lead to issues with battery characteristics.

It is preferable that the second solvent change the volume of the insulating resin layer by less than 10 percent.

Specific examples of such solvents include, but are not limited to, acetic acid methyl ester, acetic acid ethyl ester, acetic acid propyl ester, acetic acid butyl ester, acetic acid pentyl ester, acetic acid hexyl ester, acetic acid heptyl ester, acetic acid octyl ester, acetic acid nonyl ester, acetic acid decyl ester, acetic acid isopropyl ester, acetic acid isobutyl ester, acetic acid isoamyl ester, propionic acid methyl ester, propionic acid ethyl ester, propionic acid propyl ester, propionic acid butyl ester, propionic acid pentyl ester, propionic acid hexyl ester, propionic acid heptyl ester, propionic acid octyl ester, propionic acid nonyl ester, propionic acid decyl ester, propionic acid isopropyl ester, propionic acid isobutyl ester, butyric acid methyl ester, butyric acid ethyl ester, butyric acid propyl ester, butyric acid butyl ester, butyric acid pentyl ester, butyric acid hexyl ester, butyric acid heptyl ester, butyric acid octyl ester, butyric acid nonyl ester, butyric acid decyl ester, butyric acid isopropyl ester, butyric acid isobutyl ester, valeric acid methyl ester, valeric acid ethyl ester, valeric acid propyl ester, valeric acid butyl ester, valeric acid pentyl ester, valeric acid hexyl ester, valeric acid heptyl ester, valeric acid octyl ester, valeric acid nonyl ester, valeric acid decyl ester, valeric acid isopropyl ester, valeric acid isobutyl ester, valeric acid isoamyl ester (valeric acid isopentyl ester), caproic acid methyl ester, caproic acid ethyl ester, caproic acid propyl ester, caproic acid butyl ester, caproic acid pentyl ester, caproic acid hexyl ester, caproic acid heptyl ester, caproic acid octyl ester, caproic acid nonyl ester, caproic acid isopropyl ester, caproic acid isobutyl ester, heptanoic acid methyl ester, heptanoic acid ethyl ester, heptanoic acid propyl ester, heptanoic acid butyl ester, heptanoic acid pentyl ester, heptanoic acid hexyl ester, heptanoic acid heptyl ester, heptanoic acid octyl ester, heptanoic acid isopropyl ester, heptanoic acid isobutyl ester, octanoic acid methyl ester, octanoic acid ethyl ester, octanoic acid propyl ester, octanoic acid butyl ester, octanoic acid pentyl ester, octanoic acid hexyl ester, octanoic acid heptyl ester, octanoic acid isopropyl ester, octanoic acid isobutyl ester, nonanoic acid methyl ester, nonanoic acid ethyl ester, nonanoic acid propyl ester, nonanoic acid butyl ester, nonanoic acid pentyl ester, nonanoic acid hexyl ester, nonanoic acid isopropyl ester, nonanoic acid isobutyl ester, decanoic acid methyl ester, decanoic acid ethyl ester, decanoic acid propyl ester, decanoic acid butyl ester, decanoic acid pentyl ester, decanoic acid isopropyl ester, decanoic acid isobutyl ester, undecanoic acid methyl ester, undecanoic acid ethyl ester, undecanoic acid propyl ester, undecanoic acid butyl ester, undecanoic acid isopropyl ester, undecanoic acid isobutyl ester, dodecanoic acid methyl ester, dodecanoic acid ethyl ester, dodecanoic acid propyl ester, dodecanoic acid isopropyl ester, isobutyric acid methyl ester, isobutyric acid ethyl ester, isobutyric acid propyl ester, isobutyric acid butyl ester, isobutyric acid pentyl ester, isobutyric acid hexyl ester, isobutyric acid heptyl ester, isobutyric acid octyl ester, isobutyric acid nonyl ester, isobutyric acid decyl ester, isobutyric acid isopropyl ester, isobutyric acid isobutyl ester, isovaleric acid methyl ester, isovaleric acid ethyl ester, isovaleric acid propyl ester, isovaleric acid butyl ester, isovaleric acid pentyl ester, isovaleric acid hexyl ester, isovaleric acid heptyl ester, isovaleric acid octyl ester, isovaleric acid nonyl ester, isovaleric acid decyl ester, isovaleric acid isopropyl ester, isovaleric acid isobutyl ester, isovaleric acid isoamyl ester, isocaproic acid methyl ester, isocaproic acid ethyl ester, isocaproic acid propyl ester, isocaproic acid butyl ester, isocaproic acid pentyl ester, isocaproic acid hexyl ester, isocaproic acid heptyl ester, isocaproic acid octyl ester, isocaproic acid nonyl ester, isocaproic acid isopropyl ester, isocaproic acid isobutyl ester, t-butyl acetate, 2-ethylhexyl acetate, pivalic acid ethyl ester, t-butyl propionate, 2-ethylbutyric acid methyl ester, 2-ethylbutyric acid ethyl ester, t-butyl acetic acid ethyl ester, and DL-2-methylbutyric acid ethyl ester.

The resin in the insulating resin layer changes in volume by swelling due to the second solvent, for example. Whether the second solvent changes the volume of the insulating resin layer by no more than 10 percent can be determined by heating and drying the swollen resin at 120 degrees Celsius for one hour, calculating the weight of the swollen solvent per unit volume from the weight before and after drying, and using the solvent's specific gravity to calculate the solvent volume.

The content of the second solvent is not particularly limited and can be appropriately selected depending on the purpose. It is preferable that the content be at least 10 percent by mass relative to the entire of the liquid composition for forming the electrode composite layer. A content of at least 10 percent by mass can minimize the occurrence of unevenness during film formation, allowing the formation of a highly uniform liquid layer of the liquid composition for forming the electrode composite layer. Furthermore, it is preferable that the content of the second solvent is at least 80 percent by mass relative to the entire of the liquid composition for forming the electrode composite layer. A content of at least 80 percent by mass makes it possible to achieve a liquid composition with a viscosity that facilitates the formation of a highly uniform liquid layer.

Binder

As long as the binder can bind the negative electrode materials to each other, the positive electrode materials to each other, the negative electrode materials to the negative electrode substrate, and the positive electrode materials to the positive electrode substrate, it is not particularly limited and can be appropriately selected according to the purpose. If the liquid composition for forming the electrode composite layer is used for inkjet discharging, it is preferable that the binder minimally increase the viscosity of the liquid composition for forming the electrode composite layer, to minimize nozzle clogging in the liquid discharging head.

As the binder, polymer compounds can be used.

There are no particular restrictions on the polymer compounds, and they can be appropriately selected according to the purpose.

Examples include, but are not limited to, thermoplastic resins such as polyvinylidene fluoride (PVDF), acrylic resin, polyethylene, polypropylene, polyurethane, nylon, polytetrafluoroethylene, polyphenylene sulfide, polyethylene terephthalate, polybutylene terephthalate, polyamide compounds, polyimide compounds, polyamide-imide, ethylene-propylene-butadiene rubber (EPBR), styrene-butadiene rubber (SBR), nitrile butadiene rubber (NBR), isoprene rubber, polyisobutene, polyethylene glycol (PEO), polymethyl methacrylate (PMMA), and polyethylene vinyl acetate (PEVA).

The content of the binder is not particularly restricted and can be appropriately set depending on the purpose. It is preferable that the content be between 1 percent by mass and 15 percent by mass relative to the entire of the liquid composition for forming the electrode composite layer, with a more preferable range between 3 percent by mass and 10 percent by mass. If the content of the binder relative to the active material is at least 1 percent by mass relative to the entire of the liquid composition for forming the electrode composite layer, it is suitable for strongly binding the active material to the substrate.

As for the resin, it is preferable that the solubility in the first solvent be at most 1 percent.

In this preferable range, the resin is prevented from dissolving in the first solvent, which would otherwise reduce the binding ability of the electrode film. Specific examples include polyvinylidene fluoride (PVDF), styrene-butadiene rubber (SBR), nitrile butadiene rubber (NBR), isoprene rubber, and acrylic resin.

Conductive Assistant

The conductive assistant is not particularly limited and can be suitably selected to suit to a particular application. Examples of the conductive assistant include, but are not limited to, carbon black produced by a method such as a furnace method, an acetylene method, and a gasification method, and carbon materials such as carbon nanofibers, carbon nanotubes, graphene, and graphite particles.

Conductive assistants other than the carbon materials include, but are not limited to, metal particles and metal fiber of aluminum. The conductive assistant may be combined with an active material in advance.

The content of the conductive assistant is not particularly restricted and can be adjusted according to the purpose. It is preferable for the content to be at most 10 percent by mass relative to the entire liquid composition for forming the electrode composite layer, with a more preferable range of at most 8 percent by mass.

A content of the conductive assistant of at most 10 percent by mass relative to the entire of the liquid composition for forming the electrode composite layer is suitable for enhancing the stability of the liquid composition for an electrode composite layer. A content of the conductive assistant of at most 8 percent by mass relative to the entire of the liquid composition for forming the electrode composite layer is suitable for further enhancing the stability of the liquid composition for an electrode composite layer.

Dispersant

As long as it can improve the dispersibility of the active material within the liquid composition for the electrode composite layer, the dispersant is not particularly restricted.

Examples include, but are not limited to, polymer dispersants such as polyethylene oxide, polypropylene oxide, polycarboxylic acid, naphthalene sulfonic acid formalin condensates, polyethylene glycol, polycarboxylic acid partial alkyl esters, polyether, and polyalkylene polyamine; low molecular weight dispersants such as alkyl sulfonic acid, quaternary ammonium alkylene oxide of higher alcohols, polyvalent alcohol esters, and alkyl polyamines; and inorganic dispersants such as polyphosphate-based dispersants.

Solid Electrolyte

As long as it is a solid substance that possesses electronic insulation and exhibits ionic conductivity, there are no particular restrictions on the solid electrolyte. Sulfide solid electrolytes and oxide solid electrolytes are preferred to achieve

high ionic conductivity.

Examples of sulfide solid electrolytes include, but are not limited to, $Li_{10}GeP_2S_{12}$ and $Li_6PS_5X$ (X = F, Cl, Br, I) with an argyrodite-type crystal structure.

Examples of oxide solid electrolytes include, but are not limited to, LLZ ($Li_7La_3Zr_2O_{12}$) with a garnet-type crystal structure, LATP ($Li_{1+x}Al_xTi_{2-x}(PO_4)_3$) ($0.1 \leq x \leq 0.4$) with a NASICON-type crystal structure, LLT ($Li_{0.33}La_{0.55}TiO_3$) with a perovskite-type crystal structure, and amorphous LIPON ($Li_{2.9}PO_{3.3}N_{0.4}$).

These solid electrolytes can be used either alone or in combination of two or more types.

As electrolyte materials to be dissolved or dispersed in liquid to form these solid electrolyte layers, examples include, but are not limited to, $Li_2S$ and $P_2S_5$, which are precursor materials for solid electrolytes, and $Li_2S$-$P_2S_5$-based glass, $Li_7P_3S_{11}$ glass ceramics, which are materials for solid electrolytes.

Solvent Removing Process and Solvent Removing Device

The solvent removal process involves the simultaneous removal of both the first solvent and the second solvent. It is preferable that the solvent removal process be performed after the crosslinking reaction of the polymerizable compound to form the insulating resin layer.

The solvent removal device involves the simultaneous removal of both the first solvent and the second solvent.

By simultaneously removing the first solvent and the second solvent, curling (warping) of the electrode can be prevented, even when an insulating resin layer formed by polymerizing a polymerizable compound as a guide during electrode manufacturing is used.

In the manufacturing of electrodes, the primary factors contributing to electrode curling are shrinkage during polymerization and shrinkage due to solvent removal during drying.

Creating a guide with resin via polymerization presents a problem of shrinkage due to polymerization. At this time, the formation of a porous structure in the resin can indeed prevent shrinkage due to polymerization; however, curling is assumed to occur as the self-weight load on the resin increases following the removal of solvent from the porous structures of the electrode and insulating layer. This problem is particularly severe when the resin is crosslinkable.

Hence, in the present disclosure, the simultaneous removal of both the first solvent and the second solvent prevents shrinkage due to solvent removal, while the resin's porous structure prevents shrinkage due to polymerization. This approach can prevent electrode curling (warping), even when an insulating resin layer formed by polymerizing a polymerizable compound is used as a guide during electrode manufacturing. Moreover, if a crosslinkable resin is used, this method is even more effective in preventing electrode curling (warping).

There are no particular restrictions on the solvent removal process and the solvent removal device, and they can be appropriately selected depending on the purpose. For example, a method that removes the solvent from the insulating resin layer by heating can be employed.

In this case, it is preferable to heat under reduced pressure, as this promotes solvent removal and reduces the amount of residual solvent in the insulating resin layer.

Heating can be done using a stage, or a heating mechanism other than a stage may be used. The heating mechanism may be installed on either the upper or lower side of the substrate, or multiple heating mechanisms may be installed. There are no particular restrictions on the heating mechanism; examples include, but are not limited to, resistance heaters, infrared heaters, and fan heaters. There is no particular limit to the heating temperature, but in terms of energy use, it is preferably between 70 degrees Celsius and 150 degrees Celsius.

Other Processes and Other Devices

In the method of manufacturing electrodes for electrochemical devices, other processes can be appropriately selected based on the purpose, as long as they do not impair the effects of the present disclosure.

In the device for manufacturing electrodes for electrochemical devices, other devices can be appropriately selected based on the purpose, as long as they do not impair the effects of the present disclosure.

In the method of manufacturing electrodes for electrochemical devices, there are no particular restrictions on the order of the insulating resin layer forming process and the electrode composite layer forming process. Specifically, the electrode composite layer forming process may be performed before the insulating resin layer forming process, with the insulating resin layer being formed around the outer periphery of the electrode composite layer after its formation. In this case, the method of manufacturing electrodes for electrochemical devices involves performing the electrode composite layer forming process, the insulating resin layer forming process, and then the solvent removal process in that order.

Similarly, the electrode composite layer forming process may be performed after the insulating resin layer forming process, with the insulating resin layer being formed around the outer periphery of the substrate, and then the electrode composite layer being formed inside the insulating resin layer. In this case, the method of manufacturing electrodes for electrochemical devices involves performing the insulating resin layer forming process, the electrode

composite layer formation process, and then the solvent removal process in that order. The insulating resin layer and the electrode composite layer may be formed simultaneously.

Method of Manufacturing Electrode Laminate and Device for Manufacturing Electrode Laminate

The method of manufacturing electrode laminate according to the present disclosure includes the insulating resin layer forming process, the electrode composite layer forming process, and the solid electrolyte layer forming process. Additionally, it may optionally include a pressing process and other processes.

The device for manufacturing electrode laminate according to the present disclosure preferably includes a accommodating unit, an insulating resin layer forming device, an electrode composite layer forming device, and a solid electrolyte layer forming device. It may optionally also include pressing device and other devices.

Note that the storage container, the insulating resin layer forming process, the insulating resin layer forming device, the electrode composite layer forming device, the electrode composite layer forming device, other processes, and other devices are similar to those described in the sections on the method of manufacturing electrodes for electrochemical devices and the device for manufacturing electrodes for electrochemical devices. Therefore, redundant descriptions are omitted.

Pressing Process and Pressing Device

The pressing process is to press the electrode composite layer and insulating resin layer.

The pressing device is to press the electrode composite layer and insulating resin layer.

The pressing process is suitably executed by the pressing device.

Regarding the pressing process and device, there are no particular restrictions; it can be performed using commercially available pressure molding equipment. The electrode composite layer and the insulating resin layer are possibly pressed in the substrate direction. Examples include, but are not limited to, uniaxial presses, roll presses, cold isostatic presses (CIP), and hot presses. Among these, cold isostatic presses (CIP), which can apply isotropic pressure, are preferred.

There are no particular restrictions on the timing of the pressing process; it can be appropriately selected according to the objective. For example, the electrode composite layer and the insulating resin layer can be pressed after being formed on the substrate, or the pressing can be done after the solid electrolyte layer has been provided, or at both timings.

Carrying out the pressing process after forming the electrode composite layer and the insulating resin layer on the substrate, but before forming the solid electrolyte layer, makes the average thickness of the electrode composite layer and the average thickness of the insulating resin layer approximately equal. This sequence helps to distribute the pressure load, even if high pressure is applied during pressing the solid electrolyte layer provided on the electrode.

Regarding the pressing pressure, there are no particular restrictions, and it can be appropriately selected according to the objective; however, it is preferable to apply a pressure that enables the substrate and the electrode composite layer to be bonded and densification of the electrode composite layer at the same time. More specifically, a pressure between 1 MPa and 900 MPa is preferable, and a range between 250 MPa and 700 MPa is even more preferable.

Solid Electrolyte Layer Forming Process and Solid Electrolyte Layer Forming Device

The solid electrolyte layer forming process in the method of manufacturing an electrode laminate involves forming a solid electrolyte layer on the electrode composite layer and the insulating resin layer.

The solid electrolyte layer forming device in the apparatus for manufacturing an electrode laminate refers to the device for forming a solid electrolyte layer on the electrode composite layer and the insulating resin layer.

There are no particular limitations on the method of forming the solid electrolyte layer, and it can be appropriately selected according to the objective. For example, one way of forming the solid electrolyte involves applying a liquid composition containing a solid electrolyte, and optionally a binder, onto the electrode composite layer and the insulating resin layer, followed by drying through solidification.

The method of applying the liquid composition is not particularly limited. Specific examples include, but are not limited to, liquid discharging methods such as an inkjet method, a spray coating method, and a dispenser method, spin coating, casting, MICROGRAVURE™ coating, gravure coating, bar coating, roll coating, wire bar coating, dip coating, slit coating, capillary coating, nozzle coating, gravure printing, screen printing, flexographic printing, offset printing, and reverse printing.

In the method of manufacturing an electrode laminate, there are no particular restrictions on the order of the insulating resin layer forming process and the electrode composite layer forming process. Specifically, the electrode composite layer forming process may be performed before the insulating resin layer forming process, with the insulating resin layer being formed around the outer periphery of the electrode composite layer after its formation. In that case, the method of manufacturing the electrode laminate is carried out in the following order: the electrode composite layer forming

process, the insulating resin layer forming process, the solvent removal process, the pressing process.

Similarly, the electrode composite layer forming process may be performed after the insulating resin layer forming process, with the insulating resin layer being formed around the outer periphery of the substrate, and then the electrode composite layer being formed inside the insulating resin layer. In that case, the method of manufacturing the electrode laminate is carried out in the following order: the insulating resin layer forming process, the solvent removal process, the electrode composite layer forming process, the pressing process, and the solid electrolyte layer forming process.

Embodiment for Forming Insulating Resin Layer or Electrode Laminate by Directly Applying Liquid Composition to Substrate

FIG. 9 is a schematic diagram illustrating an example of an apparatus 1000 for manufacturing an electrode including a device (liquid discharging device) for manufacturing an insulating resin layer to execute the method of manufacturing the electrode laminate relating to the present disclosure.

The apparatus 100 includes an electrode composite layer manufacturing device 400 and an insulating resin layer manufacturing device 500 including a conveyance unit 5, a printing unit 100, a polymerization unit 200, a heating unit 300, and a roller 7.

The conveyance unit 5 conveys a printing substrate at a preset speed in the order of the electrode composite layer manufacturing device 400, the printing unit 100, the polymerization unit 200, and the heating unit 300.

The manufacturing method illustrated in FIG. 9, the electrode composite layer manufacturing device 400 forms an electrode composite layer before the insulating resin layer is formed.

Instead, the electrode composite layer manufacturing device 400 can be disposed immediately after the polymerization unit 200 to form an electrode composite layer after an insulating resin layer is formed.

Electrode Composite Layer Manufacturing Device 400

The electrode composite layer manufacturing device 400 includes a printing device 4a, which is an example of a liquid composition applying device for carrying out liquid composition application on the printing substrate, a storage container 4b that contains the liquid composition 6, and a supply tube 4c that supplies the liquid composition stored in the storage container 4b to the printing device 4a.

The electrode composite layer manufacturing device 400 discharges the liquid composition 6 from the printing device 4a onto the printing substrate, forming the liquid composition into a thin film. The storage container 4b may be configured to be integrated with or detachable from the insulating resin layer manufacturing device. Additionally, the storage container 4b may be designed to add materials to a container that is either integrated with or detachable from the insulating resin layer manufacturing device.

There are no particular limitations on the storage container 4b and supply tube 1c as long as they can stably store and supply the liquid composition 6, and they can be appropriately selected according to the purpose.

It is preferable that the materials constituting the storage container 4b and supply tube 1c have light-shielding properties in the relatively short wavelength regions of ultraviolet and visible light. Such materials are preferred to prevent the liquid composition 6 from initiating polymerization due to exposure to external light.

Printing Unit 100

The printing unit 100 includes a printing device 1a, which is an example of a liquid composition applying device for carrying out liquid composition application on the printing substrate, a storage container 1b that contains the liquid composition 6, and a supply tube 1c that supplies the liquid composition stored in the storage container 1b to the printing device 1a.

The printing unit 100 discharges the liquid composition 6 from the printing device 1a onto the printing substrate, forming the liquid composition into a thin film. The storage container 1b may be configured to be integrated with or detachable from the insulating resin layer manufacturing device. Additionally, the storage container 1b may be designed to add materials to a container that is either integrated with or detachable from the insulating resin layer manufacturing device.

There are no particular limitations on the storage container 1b and supply tube 1c as long as they can stably store and supply the liquid composition 6, and they can be appropriately selected according to the purpose.

It is preferable that the materials constituting the storage container 1b and supply tube 1c have light-shielding properties in the relatively short wavelength regions of ultraviolet and visible light. Such materials are preferred to prevent the liquid composition 6 from initiating polymerization due to exposure to external light.

Polymerization Unit 200

As illustrated in FIG. 9, in the case of photopolymerization, the polymerization unit 200 includes a light irradiation device 2a, which is an example of a liquid composition curing device for carrying out the liquid composition curing process, and a polymerization inert gas circulation device 2b, which circulates an inert gas for polymerization.

The light irradiation device 2a irradiates the thin film-like liquid composition formed by the printing unit 100 with light in the presence of a polymerization inert gas, initiating photopolymerization to obtain an insulating resin layer.

The light irradiation device 2a is not particularly limited as long as it can initiate and progress the polymerization of compounds in the liquid composition. It can be selected appropriately according to the absorption wavelength of the photopolymerization initiator contained in the liquid composition. Examples include, but are not limited to, ultraviolet light sources such as high-pressure mercury lamps, metal halide lamps, thermal positive electrode tubes, cold positive electrode tubes, and LEDs. However, since light with shorter wavelengths tends to penetrate more deeply, it is preferable to select the light source according to the thickness of the insulating resin layer to be formed.

The polymerization inert gas circulation device 2b reduces the concentration of polymerization-active oxygen in the atmosphere to prevent the inhibition of polymerization reactions of polymerizable compounds near the surface of the liquid composition. Inert gases for polymerization include, for example, nitrogen, carbon dioxide, and argon.

It is preferable to maintain the $O_2$ concentration in the inert gas below 20 percent (a lower oxygen concentration than in the atmosphere) to achieve a greater inhibition reduction effect. More preferably, the $O_2$ concentration should be between 0 and 15 percent, and even more preferably between 0 and 5 percent.

Additionally, it is preferable for the polymerization inert gas circulation device 2b to be equipped with a temperature control device to ensure stable polymerization conditions.

The polymerization unit 200 may be a heating device in the case of thermal polymerization. There are no particular limitations on the heating device, and it can be appropriately selected according to the purpose. Examples include, but are not limited to, substrate heating (such as hot plates), IR heaters, and hot air heaters, which may also be used in combination.

Additionally, the heating temperature and time, or the conditions for light irradiation, can be appropriately selected according to the polymerizable compounds contained in the liquid composition and the thickness of the formed film.

There are no particular limitations on the polymerization unit 200, and it can be appropriately selected according to the purpose, such as the polymerization initiator or polymerization method to be used. For example, a light irradiation device that emits ultraviolet light with a wavelength of 365 nm for 3 seconds can be used in the case of photopolymerization, and a heating device that heats at 150 degrees C under vacuum for 12 hours can be used in the case of thermal polymerization.

Heating Unit 300

The heating unit 300 includes a heating device 3a, which is an example of a solvent removal device for carrying out the solvent removal process.

As illustrated in FIG 9, the heating device 3a heats the insulating resin layer formed by the polymerization unit 200 to dry and remove any remaining solvent. At this time, the solvent removal process may be conducted under reduced pressure.

The heating unit 300 executes a polymerization promotion process of heating the insulating resin layer with the heating device 3a to further accelerate the curing (polymerization) reaction performed in the polymerization unit 200.

Additionally, it carries out an initiator removal process of heating and drying them with the heating device 3a to remove any remaining photopolymerization initiators in the insulating resin layer. These polymerization promotion and initiator removal processes do not need to be conducted simultaneously with the solvent removal process; they may be performed before or after the solvent removal process.

The heating unit 300 also carries out a polymerization completion process, where the insulating resin layer is heated under reduced pressure after the solvent removal process. The heating temperature and time can be appropriately selected according to the boiling point of the solvent contained in the insulating resin layer and the thickness of the formed film.

FIG. 10 is a schematic diagram illustrating another example of a device (liquid discharging device) for manufacturing an insulating resin layer to execute the method of manufacturing an electrode laminate according to one embodiment of the present disclosure.

A liquid discharging device 300' allows the liquid composition to circulate through a liquid discharging head 306, a liquid discharging head tank 307, and a tube 308 by adjusting a pump 310 and valves 311 and 312.

The liquid discharging device 300' is equipped with an external tank 313, allowing the liquid composition to be supplied from the external tank 313 to the liquid discharging head tank 307 by adjusting the pump 310 and operating the

valves 311, 312, and 314 when the liquid composition in the head tank 307 decreases.

The device for manufacturing the insulating resin layer allows the liquid composition to be discharged precisely onto the targeted areas of an object.

The insulating resin layer manufacturing device 500 may be equipped with a mechanism to cap the nozzle to prevent drying when the liquid composition 6 is not being discharged from the liquid discharging head.

FIG. 11 is a schematic diagram (part 1) illustrating a method of manufacturing an electrode for an electrochemical element according to one embodiment of the present disclosure.

The method of manufacturing an electrode 210 for an electrochemical element, which has an insulating resin layer formed on a substrate, includes a process of sequentially discharging a liquid composition 12A onto a substrate 211 using the liquid discharging device 300'.

First, a slender substrate 211 is prepared. The substrate 211 is then wound around a cylindrical core, with the side where the insulating resin layer 212 is to be formed facing upwards as illustrated in FIG. 11, and is placed between a feed roller 304 and a take-up roller 305. The feed roller 304 and the take-up roller 305 rotate counterclockwise to convey the substrate 211 from right to left in FIG. 11. Then, in the same manner as in FIG. 10, the liquid discharging head 306 positioned above the substrate 211 sequentially discharges droplets of the liquid composition 12A onto the substrate 211, which is conveyed between the feed roller 304 and the take-up roller 305.

Note that two or more of the liquid discharging heads 306 can be positioned in the direction substantially parallel or perpendicular to the conveyance direction of the substrate 211.

Next, the substrate 211, onto which the droplets of liquid composition 12A have been discharged, is conveyed to the polymerization unit 309 by the feed roller 304 and the take-up roller 305. As a result, the liquid composition 12A is polymerized to form the insulating resin layer 212, resulting in an electrode 210 for the electrochemical element with an insulating resin layer on the substrate. Subsequently, the electrode 210 for the electrochemical element is cut to a desired size through processes such as punching.

The polymerization unit 309 may be installed on either the upper or lower side of the substrate 211, or multiple units may be disposed.

The polymerization unit 309 is not particularly limited as long as it does not directly contact the liquid composition 12A, and can be appropriately selected according to the intended purpose. For example, in the case of thermal polymerization, options include resistance heating heaters, infrared heaters, and fan heaters, while in the case of photopolymerization, ultraviolet irradiation devices can be used. Two or more of the polymerization unit 309 can be disposed.

There is no specific limitation to the conditions for heating or light irradiation. It can be selected to suit to a particular application.

FIG. 12 is a schematic diagram illustrating another example of a device (liquid discharging device) for manufacturing an insulating resin layer to execute the method of manufacturing an electrode laminate according to one embodiment of the present disclosure.

The liquid discharging devices 300A' and a 300B' may be used in combination. Specifically, the liquid composition may be supplied from external tanks 313A and 313B connected to liquid discharging head tanks 307A and 307B, respectively, and the liquid discharging heads may include multiple heads 306A and 306B. Additionally, the system may include tubes 308A and 308B, valves 311A, 311B, 312A, 312B, and 314A, as well as pumps 310Aand 310B.

Embodiment for Forming Insulating Resin Layer or Electrode Laminate by Indirectly Applying Liquid Composition to Substrate

FIG. 13 is a configuration diagram (part 1) illustrating another example of a printing unit in which an inkjet method and a transfer method are adopted as the liquid composition application device in an insulating resin layer manufacturing device according to the present disclosure. In the printing unit illustrated in FIG. 13, a drum-shaped intermediate transfer body is used.

A printing unit 400' is an inkjet printer that forms an insulating resin layer on a substrate by transferring the liquid composition or the insulating resin layer onto the substrate via an intermediate transfer member 4001.

The printing unit 400' includes an inkjet unit 420, a transfer drum 4000, a pretreatment unit 4002, an absorption unit 4003, a heating unit 4004, and a cleaning unit 4005.

The inkjet unit 420 includes a head module 422 carrying multiple heads 101.

The heads 101 discharge a liquid composition to the intermediate transfer member 4001 supported by the transfer drum 4000 to form a liquid composition layer on the intermediate transfer member 4001. Each of the heads 101 is a line head. The nozzles thereof are disposed to cover the width of the printing region of the maximally usable substrate. The heads 101 have a nozzle surface formed with nozzles on its lower side, and the nozzle surface faces the surface of the intermediate transfer member 4001 through a minute gap. In the present embodiment, the intermediate transfer member 4001 is configured to move circularly on a circular orbit. The heads 101 are thus radially positioned.

The transfer drum 4000 faces an impression cylinder 621 and forms a transfer nip. The pretreatment unit 4002 may apply a reaction liquid to the intermediate transfer member 4001 to increase the viscosity of a liquid composition

before the heads 101 discharge the liquid composition.

The absorption unit 4003 absorbs the liquid component from the liquid composition on the intermediate transfer member 4001 before transferring.

The heating unit 4004 heats the liquid composition on the intermediate transfer member 4001 before transferring.

Heating initializes thermal polymerization of the liquid composition, forming an insulating resin layer. The solvent is also removed, thereby enhancing the transferability to the substrate.

The cleaning unit 4005 cleans the intermediate transfer member 4001 after the transfer process and removes ink and contaminants, such as dust, that remain on the intermediate transfer member 4001.

The outer surface of the impression cylinder 621 is in press contact with the intermediate transfer member 4001, allowing the insulating resin layer on the intermediate transfer member 4001 to be transferred to the substrate when it passes through the transfer nip between the impression cylinder 621 and the intermediate transfer member 4001. The impression cylinder 621 can be configured to include at least one gripping mechanism for holding the front end of the substrate on its outer surface.

FIG. 14 is a configuration diagram (part 2) illustrating another example of a printing unit in which an inkjet method and a transfer method are adopted as the liquid composition application device in an insulating resin layer manufacturing device according to the present disclosure. The printing unit 14 has an intermediate transfer member having an endless belt form.

A printing unit 400" is an inkjet printer that forms an insulating resin layer on a substrate by transferring the liquid composition or the insulating resin layer onto the substrate via an intermediate transfer belt 4006.

The printing unit 400" is equipped with an inkjet unit 420, a transfer roller 622, the intermediate transfer belt 4006, a heating unit 4007, a cleaning roller 4008, a drive roller 4009a, a counter roller 4009b, a shape-maintaining roller 4009c, a shape-maintaining roller 4009d, a shape-maintaining roller 4009e, and a shape-maintaining roller 4009f.

The printing unit 400" discharges liquid droplets of the liquid composition from the heads 101 of the inkjet unit 420 onto the outer surface of the intermediate transfer belt 4006. The liquid composition on the intermediate transfer belt 4006 is heated by the heating unit 4007 and forms an insulating resin layer through thermal polymerization. The insulating resin layer on the intermediate transfer belt 4006 is transferred to the substrate at the transfer nip where the intermediate transfer belt 4006 faces the transfer roller 622. After transfer, the cleaning roller 4008 cleans the surface of the intermediate transfer belt 4006.

The intermediate transfer belt 4006 is stretched over a drive roller 4009a, a counter roller 4009b, multiple shape-maintaining rollers 4009c, 4009d, 4009e, 4009f, and several support rollers 4009g, and moves in the direction indicated by the arrow in FIG. 14. The support rollers 4009g disposed facing the heads 101 maintain the tension of the intermediate transfer belt 4006 when the heads 101 discharge ink droplets.

## Electrochemical Element

The electrochemical element of the present disclosure preferably includes an electrode (which may hereinafter be referred to as a "composite electrode") or an electrode laminate, and may optionally have an outer casing as well.

The electrode includes an insulating resin layer containing an insulating resin and an electrode composite layer containing an active material and resin. The electrode composite layer permeates into the insulating resin layer in the direction perpendicular to the interface between the insulating resin layer and the electrode composite layer.

The electrode can be manufactured using the electrode manufacturing method of the present disclosure.

Note that the electrode laminate is the same as described in the section on Electrode Laminates, so redundant descriptions are omitted.

## Electrode for Electrochemical Element

The electrode for an electrochemical element of the present disclosure includes a substrate, an electrode composite layer disposed on the substrate, and an insulating resin layer disposed on the outer periphery of the electrode composite layer. The insulating resin layer is formed by curing a liquid composition and has a porous structure.

Note that the liquid composition is the same as described in the section on "Liquid Composition" and the insulating resin layer is the same as described in the section on Insulating Resin Layer, so redundant descriptions are omitted.

In the present specification, the term "electrode" collectively refers to both the negative electrode and the positive electrode, the term "substrate" collectively refers to both the negative electrode substrate and the positive electrode substrate, and the term "electrode composite layer" collectively refers to both the negative electrode composite layer and the positive electrode composite layer.

Furthermore, when the first electrode is a negative electrode, the second electrode refers to a positive electrode, and when the first electrode is a positive electrode, the second electrode refers to a negative electrode.

Electrode Laminate

The electrode for an electrochemical element of the present disclosure can be suitably applied to an electrode laminate.

The electrode for an electrochemical element of the present disclosure includes a substrate, an electrode composite layer disposed on the substrate, an insulating resin layer disposed on the outer periphery of the electrode composite layer, and a solid electrolyte layer disposed on the electrode composite layer and the insulating resin layer. The insulating resin layer is formed by curing a liquid composition and has a porous structure.

Note that the liquid composition is the same as described in the section on Liquid Composition and the insulating resin layer is the same as described in the section on Insulating Resin Layer, so redundant descriptions are omitted.

FIG. 1 is a schematic cross-sectional diagram illustrating an electrode for an electrochemical element according to one embodiment of the present disclosure. An electrode 25 for an electrochemical element includes a first substrate 21, a first electrode composite layer 20 disposed on the first substrate 21, and an insulating resin layer 10 disposed on the outer periphery of the first electrode composite layer 20.

Note that FIG. 1 illustrates a configuration in which the electrode composite layer 20 and the insulating resin layer 10 are provided on one side of the first substrate 21, but the electrode composite layer 20 and the insulating resin layer 10 may be provided on both opposing sides of the first substrate 21.

FIG. 2A is a schematic diagram illustrating a cross sectional view of an electrode laminate according to a different embodiment of the present disclosure. FIG. 2B is a schematic diagram illustrating a cross sectional view of an electrode laminate according to another embodiment of the present disclosure. FIG. 2C is a schematic diagram illustrating a cross sectional view of an electrode laminate according to yet another embodiment of the present disclosure. The electrode laminate 35 includes a first substrate 21, a first electrode composite layer 20 disposed on the first substrate 21, an insulating resin layer 10 disposed on the outer periphery of the first electrode composite layer 20, and a solid electrolyte layer 30 disposed on the first electrode composite layer 20 and the insulating resin layer 10.

Note that FIGS. 2A to 2C illustrate the configuration in which the electrode composite layer 20, the insulating resin layer 10, and the solid electrolyte layer 30 are provided on one side of the first substrate 21, but the electrode composite layer 20, the insulating resin layer 10, and the solid electrolyte layer 30 may be provided on both opposing sides of the first substrate 21.

Furthermore, as illustrated in FIG. 2B, an adhesive layer 22 containing a metal that forms an alloy with lithium may be provided between the substrate and the electrode composite layer.

The electrode composite layer may have an opening 23 as illustrated in FIG. 2C.

The number of openings 23 is preferably one or more, and more preferably multiple.

The openings 23 may penetrate the electrode composite layer from the surface of the electrode composite layer to the surface of the substrate, or it may not penetrate to the surface of the substrate.

The openings 23 may be hollow or filled with a material 24. When the openings 23 are filled with the material 24, the material 24 may be a single substance or a mixture of two or more substances, but in either case, the material 24 should be different in nature (compound or composition) from the material constituting the electrode composite layer. The material 24 preferably contains a solid electrolyte of the solid electrolyte layer to improve ion conductivity, and more preferably has the same composition as the solid electrolyte layer.

An electrode composite layer with the openings 23 can be suitably manufactured using inkjet as an electrode composite layer forming device because coating control is easy.

FIG. 3 is a schematic diagram illustrating a top view of an electrode for an electrochemical element according to one embodiment of the present disclosure. FIG. 4 is a schematic diagram illustrating a top view of an electrode for another electrochemical element according to one embodiment of the present disclosure. FIG. 5 is a schematic diagram illustrating a top view of an electrode for yet another electrochemical element according to one embodiment of the present disclosure.

In FIG. 3, the insulating resin layer 10 is provided in contact with two sides of the outer periphery of the first electrode composite layer 20.

In FIG. 4, the insulating resin layer 10 is provided in contact with the two long sides of the outer periphery of the first electrode composite layer 20, as well as to the two corners of those long sides.

In FIG. 5, the insulating resin layer 10 is provided continuously in contact with all four sides of the outer periphery of the first electrode composite layer 20. The insulating resin layer may also be provided in contact with the sides in a discontinuous manner.

In the present specification, "arranged on the outer periphery of the electrode composite layer" means that the insulating resin layer may be arranged on at least two sides of the outer periphery of the electrode composite layer, on three sides of the outer periphery of the electrode composite layer, or on all four sides of the outer periphery of the electrode composite layer. Additionally, the insulating resin layer may have recesses or notches on any side for the protrusion of electrode tabs.

In the present specification, the phrase "arranged on the outer periphery of the substrate" means that the

insulating resin layer may be arranged so as to cover the edge of the substrate, or it may be arranged in such a way that the substrate is exposed, as illustrated in FIGS. 3 to 5.

FIG. 6A is a schematic diagram illustrating a cross sectional view (part 1) of a positional relationship between the insulating resin layer and electrode composite layer in an electrode for electrochemical element according to the present disclosure. FIG. 6B is a schematic diagram illustrating a cross sectional view (part 2) of a positional relationship between the insulating resin layer and electrode composite layer in an electrode for electrochemical element according to the present disclosure. FIG. 6C is a schematic diagram illustrating a cross sectional view (part 3) of a positional relationship between the insulating resin layer and electrode composite layer in an electrode for electrochemical element according to the present disclosure. FIG. 6D is a schematic diagram illustrating a cross sectional view (part 4) of a positional relationship between the insulating resin layer and electrode composite layer in an electrode for electrochemical element according to the present disclosure.

The insulating resin layer 10 may be spaced apart from the first electrode composite layer 20, as illustrated in FIG. 6A, or it may be in contact with the first electrode composite layer 20, as illustrated in FIGS. 6B to 6D. Among these configurations, it is preferable for the insulating resin layer 10 to be in contact with the first electrode composite layer 20.

In the present disclosure, it is preferable for the electrode active material layer and the insulating resin layer to be in contact on the same plane to reduce cracking in the electrode during the pressing process for obtaining the electrode.

If a gap appears between the electrode active material layer and the insulating resin layer, it becomes difficult for the insulating resin layer to fully function as a positive electrode guide during pressing, potentially leading to the formation of cracks in the electrode and, as a result, affecting battery performance.

In the case in which the insulating resin layer 10 is in contact with the first electrode composite layer 20, the facing surfaces of the insulating resin layer 10 and the first electrode composite layer 20 may be partially in contact, as illustrated in FIG. 6B, or they may be in full contact, as illustrated in FIGS. 6C to 6D.

If the first electrode composite layer 20 is provided after the formation of the insulating resin layer 10, the first electrode composite layer 20 overlaps with the insulating resin layer 10, as illustrated in FIG. 6C. Similarly, if the insulating resin layer 10 is provided after the formation of the first electrode composite layer 20, the insulating resin layer 10 overlaps with the first electrode composite layer 20, as illustrated in FIG. 6D.

In producing a battery using the electrode of the present disclosure, it is advantageous for battery performance to maximize the contact area between the electrode and the solid electrolyte layer. At the interface where the electrode active material layer and the insulating resin layer are in contact, covering the insulating resin layer is preferable for the electrode active material layer.

This is because if the insulating resin layer covers the electrode active material layer, the contact area between the solid electrolyte layer and the electrode active material layer is reduced.

For example, as illustrated in FIG. 6D, at the interface between the insulating resin layer 10 and the electrode active material layer 20, the electrode composite layer 20 is positioned on the insulating resin layer 10. In this case, the surface area of the top of electrode composite layer 20 is larger compared to that in FIG. 6C.

FIG. 7 is a schematic diagram illustrating a top view of a positional relationship between the insulating resin layer and electrode composite layer in an electrode for electrochemical element according to the present disclosure.

If the insulating resin layer 10 and the first electrode composite layer 20 are spaced apart, a distance d between the insulating resin layer 10 and the first electrode composite layer 20 (the distance between the outer periphery of the first electrode composite layer 20 and the insulating resin layer) is defined as illustrated in FIG. 7. That is, if the insulating resin layer 10 and the first electrode composite layer 20 are adjacent, the distance is d = 0, and the distance d between the insulating resin layer and the electrode composite layer is defined as the distance between the arrows illustrated in FIG. 7. In cases where the insulating resin layer overlaps the electrode composite layer, as illustrated in FIGS. 6C and 6D, or where the electrode composite layer overlaps the insulating resin layer, a negative value is used to represent this distance.

There are no particular restrictions on the distance d between the insulating resin layer 10 and the first electrode composite layer 20 (the distance between the outer periphery of the first electrode composite layer 20 and the insulating resin layer), and it can be appropriately selected based on the purpose. It is preferable for the distance to be at most 10 mm, more preferably at most 5 mm, and even more preferably at most 1 mm.

A distance d between the insulating resin layer 10 and the first electrode composite layer 20 of at most 10 mm makes it easier for the insulating resin layer and the electrode composite layer to come into contact after a pressing process, suitably leading to the formation of a uniform solid electrolyte layer on the insulating resin layer and the electrode composite layer. Moreover, when the solid electrolyte layer is pressed, it is preferable because uniform pressure can be applied to the solid electrolyte layer.

FIG. 8A is a schematic diagram illustrating a cross sectional view (part 1) of a relationship of the average thickness between the insulating resin layer and electrode composite layer in an electrode for electrochemical element according to the present disclosure. FIG. 8B is a schematic diagram illustrating a cross sectional view (part 2) of a relationship of the average thickness between the insulating resin layer and electrode composite layer in an electrode for electrochemical element according to the present disclosure. FIG. 8C is a schematic diagram illustrating a cross sectional

view (part 3) of a relationship of the average thickness between the insulating resin layer and electrode composite layer in an electrode for electrochemical element according to the present disclosure.

FIG. 15 is a schematic cross-sectional view illustrating the electrochemical element according to one embodiment of the present disclosure. The electrochemical element 45 includes a first substrate 21, a first electrode composite layer 20 disposed on the first substrate 21, an insulating resin layer 10 disposed on the outer periphery of the first electrode composite layer 20, a solid electrolyte layer 30 disposed on the first electrode composite layer 20 and the insulating resin layer 10, a second electrode composite layer 40 disposed on the solid electrolyte layer 30, and a second substrate 31 disposed on the second electrode composite layer 40. The electrochemical element 45 is a single-cell layer, and this can be laminated to form a stacked battery.

Note that FIG. 15 illustrates the configuration in which the electrode composite layer 20, the insulating resin layer 10, and the solid electrolyte layer 30 are provided on one side of the first substrate 21, but the electrode composite layer 20, the insulating resin layer 10, and the solid electrolyte layer 30 may be provided on both opposing sides of the first substrate 21. This configuration may be laminated to form a stacked battery.

FIG. 16 is a schematic cross-sectional view illustrating an example of a solid state battery, which is an electrochemical element according to one embodiment of the present disclosure.

The solid state battery illustrated in FIG. 16 includes a positive electrode (electrode composite layer) 20, a negative electrode (electrode composite layer) 40, a solid electrolyte layer 30, lead wires 50 and 51, and an outer casing 60.

The positive electrode (first electrode composite layer) 20 includes a positive electrode substrate 21 and an insulating resin layer 10 disposed on the positive electrode substrate 21. The lead wire 50 is connected to the positive electrode substrate 21, and the lead wire 51 is connected to the negative electrode substrate 41. The lead wires 50 and 51 are drawn out to the outside of the outer casing 60.

In the solid state battery, the positive electrode (electrode composite layer) 20 and the negative electrode (electrode composite layer) 40 are stacked via the solid electrolyte layer 30, and the positive electrode (electrode composite layer) 20 is disposed on both sides of the negative electrode (electrode composite layer) 40. Note that there is no particular limit on the number of stacks of the positive electrodes (first electrode composite layer) 20 and the negative electrodes (second electrode composite layer) 40. Also, the number of positive electrodes (first electrode composite layers) 20 and negative electrodes (second electrode composite layers) 40 may be the same or different.

As for the outer casing, there is no particular limitation as long as it can seal the electrode laminate, and a known outer casing can be appropriately selected depending on the purpose.

The shape of the electrochemical element is not particularly limited and can be appropriately selected depending on the purpose. For example, it may be a laminate type, cylinder type, or coin type.

In electrochemical devices where short circuits can potentially occur due to dendrite deposition, it is generally common to configure the negative electrode composite layer to be larger than the positive electrode composite layer. In this case, if the positive and negative current collectors are approximately the same size, a surplus area where the positive electrode composite layer is not formed will be present in the region on the positive current collector where it faces the negative electrode composite layer. In term of electrochemical element properties, it is preferable that the insulating resin layer be provided in the surplus area of the positive electrode, that is, at the outer periphery of the positive electrode composite layer. However, if the configuration is such that the negative electrode composite layer is smaller than the positive electrode composite layer in an electrochemical element, it is preferable that the insulating resin layer be provided in the surplus area of the negative electrode, that is, at the outer periphery of the negative electrode composite layer.

Method of Manufacturing Electrochemical Element and Apparatus for Manufacturing Electrochemical Element

The method for manufacturing an electrochemical element relating to the present disclosure preferably includes an insulating resin layer forming process, an electrode composite layer forming process, a pressing process, a solid electrolyte layer forming process, a device forming process, and an electrode processing process, and may also include other optional processes.

The apparatus for manufacturing an electrochemical element relating to the present disclosure preferably includes an insulating resin layer forming device, an electrode composite layer forming device, a pressing device, a solid electrolyte layer forming device, an element forming device, and an electrode processing device, and may also include other optional devices.

Since the insulating resin layer forming process, insulating resin layer forming device, electrode composite layer forming process, electrode composite layer forming device, pressing process, pressing device, solid electrolyte layer forming process, solid electrolyte layer forming device, other processes, and other devices are the same as those described in the sections on Method of Manufacturing Electrode for Electrochemical Element and Apparatus for Manufacturing Electrode for Electrochemical Element and Method of Manufacturing Electrode Laminate and Apparatus for Manufacturing Electrode Laminate, the repetitive descriptions are omitted.

Element Forming Process and element Forming Device

The element forming process is for manufacturing an electrochemical element using an electrode laminate.
The element forming device is for manufacturing an electrochemical element using an electrode laminate.
There are no particular restrictions on the method of manufacturing an electrochemical element using an electrode laminate, and an appropriate, known method of manufacturing an electrochemical element may be selected according to a particular application. For example, it may include at least one of placing counter electrodes, winding or laminating, and housing in a container to form an energy storage element.
Note that the element forming process does not need to include all processes of element forming and may include only a part of the processes involved in element forming.

Electrode Processing Process and Electrode Processing Device

The electrode processing process is for processing an electrode with a formed insulating resin layer, conducted after the liquid composition application process in the insulating resin layer forming process. The electrode processing process may include at least one of a cutting process, folding process, and laminating process.
The electrode processing device is for processing an electrode with a formed insulating resin layer. The electrode processing device may include at least one of a cutting device, folding device, and laminating device.
For example, the electrode processing device may cut the electrode with a formed insulating resin layer to create an electrode laminate. The electrode processing device may, for example, wind or laminate the electrode laminate with a formed insulating resin layer. The electrode processing device may, for example, include an electrode processing device that performs cutting, accordion folding, laminating, or winding of the electrode laminate with a formed insulating resin layer according to the desired battery format.
The application of the electrochemical device is not particularly limited and it can be suitably selected to suit to a particular application.
Examples include, but are not limited to: mobile objects such as vehicles; and electric devices, such as mobile phones, notebook computers, pen-input personal computers, mobile personal computers, electronic book players, cellular phones, portable facsimiles, portable copiers, portable printers, headphone stereos, video movies, liquid crystal televisions, handy cleaners, portable compact discs (CDs), minidiscs, transceivers, electronic notebooks, calculators, memory cards, portable tape recorders, radios, backup power supplies, motors, lighting devices, toys, game machines, watches, strobes, and cameras. Of these, vehicles and electric devices are preferable.
The mobile objects include, but are not limited to, ordinary vehicles, heavy special cars, small special vehicles, trucks, heavy motorcycles, and ordinary motorcycles.
An embodiment of the mobile object as the electrochemical element relating to the present disclosure is described with reference to the drawings. The present disclosure is not limited to these embodiments.

Mobile Object

FIG. 17 is a schematic diagram illustrating a mobile object, which is an electrochemical element according to an embodiment of the present disclosure.
A mobile object 70 is an electric vehicle, for example. The mobile object 70 includes a motor 71, an electrochemical device 72, and wheels 73.
The electrochemical device 72 is an electrochemical device relating to the present disclosure. The electrochemical device 72 drives a motor 71 by supplying electricity to the motor 71. The motor 71 driven can drive the wheels 73, and as a result, the mobile object 70 can move.
Since the mobile object 70 is equipped with the electrochemical device 72, it prevents short circuits between the positive and negative electrodes, and is driven by the power from an electrochemical device that has excellent battery properties, allowing the vehicle to move safely and efficiently.
The mobile object 70 is not limited to an electric vehicle; it may be a plug-in hybrid vehicle (PHEV), a hybrid electric vehicle (HEV), and a locomotive or motorcycle that can operate using both a diesel engine and an electrochemical element. Additionally, the mobile object 70 could be a transport robot used in factories, capable of operating with only an electrochemical element or in combination with an engine and an electrochemical element. Furthermore, the mobile object 70 could be a device where not the entire object moves, but only a part of it, such as an assembly robot placed in a factory production line, which can operate using only an electrochemical element or in combination with an engine and an electrochemical element to move an arm or other components.
Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise

specified.

EXAMPLES

Next, the present disclosure is described in detail with reference to Examples and Comparative Examples but is not limited thereto. In the following Examples and Comparative Examples, "parts" represents "parts by mass" and, "percent", "percent by mass", unless otherwise specified.

Synthesis of Solid Electrolyte 1

Solid electrolyte 1, $Li_6PS_5Cl$ (LPSC) of an argyrodite-type sulfide solid electrolyte, was synthesized according to the method described in the publicly available literature reference 1, "J. Power Sources. 2018, 396, 33-40."

The solid electrolyte coating was prepared as follows.

Octane (available from Tokyo Chemical Industry Co., Ltd.) was used as the solvent. A dehydrated solvent, confirmed to have a moisture content of less than 100 ppm using a Karl Fischer moisture meter, was used.

To 100 parts by mass of this solvent, 100 parts by mass of the synthesized solid electrolyte and 1 part by mass of a dispersant (available from Lubrizol Corporation, Solsperse™ 21000) were admixed to obtain a solid electrolyte paint.

Surface Coating of Ion-Conductive Oxide on Active Material

As the positive electrode active material, a nickel-based positive electrode active material (nickel cobalt manganese lithium oxide, hereinafter referred to as "NCM1"; average primary particle diameter: 3.5 μm, available from TOSHIMA Manufacturing Co., Ltd.) was used. $LiNbO_3$ was used as the ion-conductive oxide for surface coating the NCM1 particles. The $LiNbO_3$ layer was formed by hydrolyzing an alkoxide solution containing lithium and niobium on the surface of NCM1 powder particles, referencing the publicly available literature reference 2, "J. Mater. Chem. A. 2021, 9, 4117-4125." First, metallic lithium (available from Honjo Metal Co., Ltd.) was dissolved in anhydrous ethanol (available from Kanto Chemical Co., Inc.) to prepare a lithium ethoxide ethanol solution. Then niobium pentaethoxide ($Nb(OC_2H_5)_5$) (available from KOJUNDO CHEMICAL LABORATORY CO., LTD.) was added to this solution to obtain an alkoxide solution containing lithium and niobium. Using a rotating fluidized bed instrument (MP-01, available from Powdertec Co., Ltd.), the NCM1 powder was fluidized, and the alkoxide solution was sprayed to obtain a precursor powder coated with the alkoxide on the surface of the NCM1 powder particles. This powder was then heated at 350 degrees C under a dry air atmosphere to synthesize LNO/NCM1, which had a $LiNbO_3$ layer formed on the NCM1 surface.

Negative Electrode Manufacturing Method

Negative Electrode 1

On a stainless steel foil substrate (50 mm × 50 mm, average thickness: 20 μm) as the electrode base, lithium metal (average thickness: 50 μm, available from Honjo Metal Co., Ltd.) was attached, and indium foil (average thickness: 50 μm, available from The Nilaco Corporation) was further attached, forming negative electrode 1 (22 mm × 22 mm).

Negative Electrode 2

As the negative electrode active material, 45.5 percent by mass graphite (Gr, available from Sigma-Aldrich Co. LLC), 1.4 percent by mass acetylene black (Denka Black, available from Denka Company Limited) as the conductive material, 1.8 percent by mass acrylonitrile butadiene rubber (NBR, available from Sigma-Aldrich Co. LLC) as the binder, and 14.8 percent by mass of Solid Electrolyte 1 were dispersed in 36.5 percent by mass anisole to prepare negative electrode Paint 2.

Negative Electrode Paint 2 was applied to both sides of a stainless steel foil substrate (50 mm × 50 mm, average thickness: 20 μm), then dried to obtain negative electrode 2 (25 mm × 25 mm).

The average thickness of Negative Electrode 2 was 61 μm, and the battery capacity per unit area was 3.38 $mAh/cm^2$.

Negative Electrode 3

As the negative electrode active material, 45.5 percent by mass silicon (Si, available from Sigma-Aldrich Co. LLC), 1.4 percent by mass acetylene black (Denka Black, available from Denka Company Limited) as the conductive material, 1.8 percent by mass acrylonitrile butadiene rubber (NBR, available from Sigma-Aldrich Co. LLC) as the binder,

and 14.8 percent by mass of Solid Electrolyte 1 were dispersed in 36.5 percent by mass anisole to prepare negative electrode Paint 3.

Negative Electrode Paint 3 was applied to both sides of a stainless steel foil substrate, then dried to obtain Negative Electrode 3 (25 mm × 25 mm).

The average thickness of Negative Electrode 3 was 21 μm, and the battery capacity per unit area was 3.61 $mAh/cm^2$.

Preparation of First Liquid Composition for Forming Insulating Resin Layer

The first liquid composition for forming the insulating resin layer was prepared by mixing the materials in the following proportions.

First Liquid Composition 1

The first liquid composition 1 for forming the insulating resin layer was obtained by mixing 22.5 percent by mass p-menthane (available from Tokyo Chemical Industry Co., Ltd.) as the first solvent, 27.5 percent by mass ethyl octanoate (available from Tokyo Chemical Industry Co., Ltd.), 50.0 percent by mass polyethylene glycol (200) diacrylate (available from DAICEL-ALLNEX LTD.) as the polymerizable compound, and 0.5 percent by mass 1-hydroxycyclohexylphenylketone (available from Tokyo Chemical Industry Co., Ltd.) as the polymerization initiator.

First Liquid Composition 2

The first liquid composition 2 was obtained by mixing 31.0 percent by mass n-decane (available from Tokyo Chemical Industry Co., Ltd.) as the first solvent, 29.0 percent by mass 2-ethylhexyl acetate (available from Tokyo Chemical Industry Co., Ltd.), 50.0 percent by mass CN2283NS (available from Arkema) as the polymerizable compound, and 0.5 percent by mass 1-hydroxycyclohexylphenylketone (available from Tokyo Chemical Industry Co., Ltd.) as the polymerization initiator.

First Liquid Composition 3

The first liquid composition 3 was obtained by mixing 31.0 percent by mass n-dodecane (available from Tokyo Chemical Industry Co., Ltd.), 29.0 percent by mass 2-ethylhexyl acetate (available from Tokyo Chemical Industry Co., Ltd.), 50.0 percent by mass CN2283NS (available from Arkema) as the polymerizable compound, and 0.5 percent by mass 1-hydroxycyclohexylphenylketone (available from Tokyo Chemical Industry Co., Ltd.) as the polymerization initiator.

Preparation of Second Liquid Composition for Forming Positive Electrode Composite Layer

Second Liquid Composition 1

The second liquid composition 1 for forming the positive electrode composite layer was prepared by dispersing 45.3 percent by mass LNO/NMC1 as the positive electrode active material, 2.2 percent by mass acetylene black (Denka Black, available from Denka Company Limited) as the conductive material, 1.4 percent by mass polybutyl methacrylate (PBMA, available from Sigma-Aldrich Co. LLC.) as the binder, and 14.7 percent by mass Solid Electrolyte 1 dispersed in 36.4 percent by mass anisole (available from Tokyo Chemical Industry Co., Ltd.) as the second solvent.

Second Liquid Composition 2

The second liquid composition 2 for forming the positive electrode composite layer was prepared by dispersing 45.3 percent by mass LNO/NMC1 as the positive electrode active material, 2.2 percent by mass acetylene black (Denka Black, available from Denka Company Limited) as the conductive material, 1.4 percent by mass polybutyl methacrylate (PBMA, available from Sigma-Aldrich Co. LLC.) as the binder, and 14.7 percent by mass Solid Electrolyte 1 dispersed in 36.4 percent by mass methyl hexanoate (available from Tokyo Chemical Industry Co., Ltd.) as the second solvent.

Second Liquid Composition 3

The second liquid composition 3 for forming the positive electrode composite layer was prepared by dispersing 45.3 percent by mass LNO/NMC1 as the positive electrode active material, 2.2 percent by mass acetylene black (Denka Black, available from Denka Company Limited) as the conductive material, 1.4 percent by mass polybutyl methacrylate (PBMA, available from Sigma-Aldrich Co. LLC.) as the binder, and 14.7 percent by mass Solid Electrolyte 1 dispersed in 36.4 percent by mass butyl butylate (available from Tokyo Chemical Industry Co., Ltd.) as the second solvent.

Second Liquid Composition 4

The second liquid composition 4 for forming the positive electrode composite layer was prepared by dispersing 45.3 percent by mass LNO/NMC1 as the positive electrode active material, 2.2 percent by mass acetylene black (Denka Black, available from Denka Company Limited) as the conductive material, 1.4 percent by mass polybutyl methacrylate (PBMA, available from Sigma-Aldrich Co. LLC.) as the binder, and 14.7 percent by mass Solid Electrolyte 1 dispersed in 36.4 percent by mass butyl acetate (available from Tokyo Chemical Industry Co., Ltd.) as the second solvent.

Example 1

Preparation of Positive Electrode

The first liquid composition 1 for forming the insulating resin layer was filled into an inkjet discharging device equipped with an inkjet head (MH5421F, available from Ricoh Industry Co., Ltd.). An aluminum foil substrate (50 mm × 50 mm, average thickness: 15 μm) was placed on a stage, and the composition was discharged to form a coating with an outer dimension of 40 mm × 40 mm, a width of 10 mm for the insulating resin layer, and an opening of 20 mm × 20 mm exposing the current collector inside.

The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating.

Next, the second liquid composition 1 was discharged using an inkjet discharging device equipped with a GEN5 head (available from Ricoh Printing Systems Co., Ltd.) to fill the inside of the 20 mm × 20 mm opening.

Subsequently, the substrate was heated at 120 degrees Celsius for 10 minutes using a hot plate to remove the first solvent and the second solvent at the same time, thereby obtaining Electrode 1 with a positive electrode composite layer-insulating resin layer structure on the electrode substrate.

Electrode 1 obtained had a positive electrode layer surface size of 21 mm × 21 mm, with no warping of the substrate. The average thickness of both the insulating resin layer and the positive electrode layer was measured using a laser microscope (VKX-3000, available from KEYENCE CORPORATION). Each layer was 97 μm thick, allowing the positive electrode to fully cover the topmost part of the insulating resin layer's edge, thereby forming a positive electrode composite layer and insulating resin layer continuously.

Electrode 1 was evaluated for warping, press resistance, and battery performance according to the evaluation criteria described below. The results are shown in Table 1.

Warping

The warping of the electrode substrate was measured as the maximum height (mm) of the warp at the edge of the electrode substrate when it was placed horizontally, and the evaluation was made based on the following evaluation criteria.

Evaluation Criteria

S: Warping is between 0 mm and less than 1 mm, indicating extremely good condition with no warping
A: Warping is between 1 mm and less than 5 mm, indicating good condition with minimal warping
C: Warping is 5 mm or more, indicating significant warping with usability issues

Press Resistance

After the electrode obtained was sealed with an aluminum laminate, it was subjected to cold isostatic pressing (CIP) at 500 MPa for 5 minutes. After pressurization, the electrode was removed from the aluminum laminate, and the presence or absence of cracks in the electrode's coated region was evaluated through visual inspection based on the following evaluation criteria.

Evaluation Criteria

A: No cracks, satisfactory
C: Cracks occurred, causing usability issues

Battery Performance

Battery Fabrication

After Electrode 1 of Example 1 was sealed with an aluminum laminate, it was subjected to cold isostatic pressing (CIP) at 500 MPa for 5 minutes. After pressurization, Electrode 1 was removed from the aluminum laminate.
No cracks were observed in the electrode. A solid electrolyte layer was formed on the positive electrode using the bar coating method, creating an electrode stack. After coating, it was sealed again with an aluminum laminate and subjected to CIP at 500 MPa for 5 minutes. Electrode 1 and Negative Electrode 1 were placed opposite each other to form a single cell layer, to which lead wires were then attached. The cell layer was then vacuum sealed with laminate to fabricate Solid State Battery 1 of Example 1.
The battery voltage of the fabricated solid state battery 1 was measured to be 2.08 V The capacity per unit area was 141 mAh/g at the first discharge.
Charging up to 3.6 V with a constant current at 20 percent of the capacity per unit area calculated from the theoretical capacity of the active material in the positive electrode was done without any issues, and no short circuit occurred.

Evaluation Criteria

S: Initial discharge capacity of 140 mAh/g or more
A: Initial discharge capacity between 130 mAh/g to less than 140 mAh/g
B: Initial discharge capacity between 120 mAh/g to less than 130 mAh/g
C: Initial discharge capacity less than 120 mAh/g

Example 2

Preparation of Positive Electrode

The first liquid composition 1 and the second liquid composition 1 for forming a resin layer were individually filled into separate inkjet discharging devices equipped with GEN5 heads (available from Ricoh Printing Systems Co., Ltd.). An aluminum foil substrate (50 mm × 50 mm, average thickness: 15 μm) serving as a current collector was placed on the stage, and the positive electrode paint was discharged and applied over a 20 mm × 20 mm area. Next the first liquid composition 1 was discharged and applied to form a shape with an outer dimension of 40 mm × 40 mm, with a 10 mm width for the insulating resin layer and a 20 mm × 20 mm electrode composite layer inside, surrounding the outer perimeter.
The coated area was then immediately exposed to UV light under a nitrogen atmosphere (light source: UV-LED (available from Phoseon Technology, product name: FJ800), wavelength: 365 nm, irradiation intensity: 30 mW/cm$^2$, irradiation time: 20 s) to cure the coating. Subsequently, the substrate was heated at 120 degrees Celsius for 10 minutes using a hot plate to remove the first solvent and the second solvent at the same time, thereby obtaining Electrode 2.
The surface size of the positive electrode layer of the obtained Electrode 2 was 20 mm × 20 mm, and the warp of the substrate was 0 mm. The average thickness of both the insulating resin layer and the positive electrode layer was measured using a laser microscope (VKX-3000, available from KEYENCE CORPORATION). Each layer was 98 μm thick, allowing the positive electrode to fully cover the topmost part of the insulating resin layer's edge, thereby forming a positive electrode composite layer and insulating resin layer continuously. Additionally, no cracks were observed in the electrode after pressing.

Battery Fabrication

Solid State Battery 2 of Example 2 was fabricated in the same manner as Example 1 except that Electrode 2 was used instead of Electrode 1.
The voltage of the fabricated Solid State Battery 2 was measured to be 2.07 V The capacity per unit area was 138 mAh/g at the first discharge. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 2 were evaluated based on the same evaluation criteria as in Example 1. The results are shown in Table 1.

Example 3

Preparation of Positive Electrode

The first liquid composition 1 and the second liquid composition 1 for forming a resin layer were individually filled into separate inkjet discharging devices equipped with GEN5 heads (available from Ricoh Printing Systems Co., Ltd.). An aluminum foil substrate (50 mm × 50 mm, average thickness: 15 μm) serving as a current collector was placed on the stage, and the first liquid composition 1 was discharged and applied to form a shape with an outer dimension of 40 mm × 40 mm, with a 10 mm width for the insulating resin layer and a 20 mm × 20 mm opening exposing the current collector inside. The positive electrode coating was then discharged and applied over the 20 mm × 20 mm area, simultaneously with the first liquid composition 1 and second liquid composition 1.

The coated area was then immediately exposed to UV light under a nitrogen atmosphere (light source: UV-LED (available from Phoseon Technology, product name: FJ800), wavelength: 365 nm, irradiation intensity: 30 mW/cm$^2$, irradiation time: 20 s) to cure the coating.

Subsequently, the substrate was heated at 120 degrees Celsius for 10 minutes using a hot plate to remove the first solvent and the second solvent at the same time, thereby obtaining Electrode 3 with a positive electrode composite layer-insulating resin layer structure on the electrode substrate.

The surface size of the obtained Electrode 3's positive electrode layer was 20.5 mm × 20.5 mm, and the warp of the substrate was 1 mm. The average thickness of the insulating resin layer was measured using a laser microscope (available from KEYENCE CORPORATION, model: VKX-3000) and found to be 97 μm. The positive electrode was in contact with and covered the insulating resin layer up to a height of 97 μm at the edges, forming a positive electrode composite layer and insulating resin layer continuously. The average thickness of the positive electrode composite layer was 98 μm. Additionally, no cracks were observed in the electrode after pressing.

Battery Fabrication

Solid State Battery 3 of Example 3 was fabricated in the same manner as Example 1 except that Electrode 3 was used instead of Electrode 1.

The voltage of the fabricated Solid State Battery 3 was measured to be 2.08 V The capacity per unit area was 138 mAh/g at the first discharge. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 3 were evaluated based on the same evaluation criteria as in Example 1. The results are shown in Table 1.

Example 4

Preparation of Positive Electrode

The first liquid composition 2 for forming a resin layer was filled into an inkjet discharging device equipped with GEN5 heads (available from Ricoh Printing Systems Co., Ltd.). An aluminum foil substrate (50 mm × 50 mm, average thickness: 15 μm) serving as a current collector was placed on the stage, and the first liquid composition 1 was discharged and applied to form a shape with an outer dimension of 40 mm × 40 mm, with a 10 mm width for the insulating resin layer and a 20 mm × 20 mm opening exposing the current collector inside.

The coated area was then immediately exposed to UV light under a nitrogen atmosphere (light source: UV-LED (available from Phoseon Technology, product name: FJ800), wavelength: 365 nm, irradiation intensity: 30 mW/cm$^2$, irradiation time: 20 s) to cure the coating.

Subsequently, the second liquid composition 1 was discharged and applied to fill the inside of the 20 mm × 20 mm opening using the inkjet discharging device equipped with GEN5 heads.

Subsequently, the substrate was heated at 120 degrees Celsius for 10 minutes using a hot plate to remove the first solvent and the second solvent at the same time, thereby obtaining Electrode 4 with a positive electrode composite layer-insulating resin layer structure on the electrode substrate.

The surface size of the Electrode 4's positive electrode layer obtained was 21 mm × 21 mm, and the warp of the substrate was 3 mm. The average thickness of both the insulating resin layer and the positive electrode layer was measured using a laser microscope (VKX-3000, available from KEYENCE CORPORATION). Each layer was 97 μm thick,

allowing the positive electrode to fully cover the topmost part of the insulating resin layer's edge, thereby forming a positive electrode composite layer and insulating resin layer continuously. Additionally, no cracks were observed in the electrode after pressing.

Battery Fabrication

Solid State Battery 4 of Example 4 was fabricated in the same manner as Example 1 except that Electrode 4 was used instead of Electrode 1.

When the battery voltage of the solid-state Battery 4 fabricated was measured, it was 2.01 V The capacity per unit area was 135 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 4 were evaluated based on the same evaluation criteria as in Example 1. The results are shown in Table 1.

Example 5

Preparation of Positive Electrode

The first liquid composition 1 for forming a resin layer was filled into an inkjet discharging device equipped with GEN5 heads (available from Ricoh Printing Systems Co., Ltd.). An aluminum foil substrate (50 mm × 50 mm, average thickness: 15 μm), which served as a current collector, was placed on the stage, and the first liquid composition 1 was discharged and applied in a shape with an outer dimension of 40 mm × 40 mm, an insulating resin layer width of 10 mm, an electrode composite layer of 20 mm × 20 mm inside, and surrounding the periphery.

The coated area was then immediately exposed to UV light under a nitrogen atmosphere (light source: UV-LED (available from Phoseon Technology, product name: FJ800), wavelength: 365 nm, irradiation intensity: 30 mW/$cm^2$, irradiation time: 20 s) to cure the coating.

Subsequently, the second liquid composition 1 was applied using a die coating device to fill the inside of the 20 mm × 20 mm opening.

Subsequently, the substrate was heated at 120 degrees Celsius for 10 minutes using a hot plate to remove the first solvent and the second solvent at the same time, thereby obtaining Electrode 5.

The surface size of the positive electrode layer of the obtained Electrode 5 was 20 mm × 20 mm, and the warp of the substrate was 0 mm. When the average thickness of the insulating resin layer and the positive electrode layer were measured using a laser microscope (available from KEYENCE CORPORATION, model VKX-3000), both were found to be 98 μm. The positive electrode was in contact with the edge of the insulating resin layer, but it did not cover the uppermost part, and the structure was not continuous between the positive electrode composite layer and the insulating resin layer. Additionally, no cracks were observed in the electrode after pressing.

Battery Fabrication

Solid State Battery 5 of Example 5 was fabricated in the same manner as Example 1 except that Electrode 5 was used instead of Electrode 1.

When the battery voltage of the solid-state Battery 5 fabricated was measured, it was 2.01 V The capacity per unit area was 129 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 5 were evaluated based on the same evaluation criteria as in Example 1. The results are shown in Table 1.

Example 6

Preparation of Positive Electrode

The first liquid composition 2 for forming the insulating resin layer was filled into an inkjet discharging device equipped with an inkjet head (MH5421F, available from Ricoh Industry Co., Ltd.). An aluminum foil substrate (50 mm × 50 mm, average thickness: 15 μm) was placed on a stage, and the composition was discharged to form a coating with an outer dimension of 40 mm × 40 mm, a width of 10 mm for the insulating resin layer, and an opening of 20 mm × 20 mm exposing the current collector inside.

The coated area was then immediately exposed to UV light under a nitrogen atmosphere (light source: UV-LED (available from Phoseon Technology, product name: FJ800), wavelength: 365 nm, irradiation intensity: 30 mW/$cm^2$, irradiation time: 20 s) to cure the coating.
Next, the second liquid composition 2 was discharged using an inkjet discharging device equipped with a GEN5 head (available from Ricoh Printing Systems Co., Ltd.) to fill the inside of the 20 mm × 20 mm opening.
Subsequently, the substrate was heated at 120 degrees Celsius for 10 minutes using a hot plate to remove the first solvent and the second solvent, thereby obtaining Electrode 1 with a positive electrode composite layer-insulating resin layer structure on the electrode substrate.
Electrode 1 obtained had a positive electrode layer surface size of 21 mm × 21 mm, with a warping of the substrate of 3 mm. The average thickness of both the insulating resin layer and the positive electrode layer was measured using a laser microscope (VKX-3000, available from KEYENCE CORPORATION). The insulating resin layer was 120 μm thick, and the positive electrode layer was 98 μm thick, allowing the insulating resin layer in contact with the positive electrode layer to fully cover the topmost part of the positive layer edge, thereby forming a positive electrode composite layer and insulating resin layer continuously. Additionally, no cracks were observed in the electrode after pressing.

Battery Fabrication

Solid State Battery 6 of Example 6 was fabricated in the same manner as Example 1 except that Electrode 6 was used instead of Electrode 1.
The voltage of Fabricated Solid State Battery 5 was measured to be 2.02 V. The capacity per unit area was 131 mAh/g for the initial discharge capacity. Charging up to 3.6 V with a constant current at 20 percent of the capacity per unit area calculated from the theoretical capacity of the active material in the positive electrode was done without any issues, and no short circuit occurred.
The "warp," "press resistance," and "battery performance" of Example 6 were evaluated based on the same evaluation criteria as in Example 1. The results are shown in Table 1.

Example 7

Preparation of Positive Electrode

The first liquid composition 2 for forming the insulating resin layer was filled into an inkjet discharging device equipped with an inkjet head (MH5421F, available from Ricoh Industry Co., Ltd.). An aluminum foil substrate (50 mm × 50 mm, average thickness: 15 μm) was placed on a stage, and the composition was discharged to form a coating with an outer dimension of 40 mm × 40 mm, a width of 10 mm for the insulating resin layer, and an opening of 20 mm × 20 mm exposing the current collector inside.
The coated area was then immediately exposed to UV light under a nitrogen atmosphere (light source: UV-LED (available from Phoseon Technology, product name: FJ800), wavelength: 365 nm, irradiation intensity: 30 mW/$cm^2$, irradiation time: 20 s) to cure the coating.
Next, the second liquid composition 2 was discharged using an inkjet discharging device equipped with a GEN5 head (available from Ricoh Printing Systems Co., Ltd.) to fill the inside of the 20 mm × 20 mm opening.
Subsequently, the substrate was heated at 120 degrees Celsius for 10 minutes using a hot plate to remove the first solvent and the second solvent, thereby obtaining Electrode 7 with a positive electrode composite layer-insulating resin layer structure on the electrode substrate.
Electrode 1 obtained had a positive electrode layer surface size of 21 mm × 21 mm, with a warping of the substrate of 3 mm. The average thickness of both the insulating resin layer and the positive electrode layer was measured using a laser microscope (VKX-3000, available from KEYENCE CORPORATION). The insulating resin layer was 70 μm thick, and the positive electrode layer was 98 μm thick, allowing the positive electrode layer in contact with the insulating resin layer to fully cover the topmost part of the insulating resin layer, thereby forming a positive electrode composite layer and insulating resin layer continuously. Additionally, no cracks were observed in the electrode after pressing.

Battery Fabrication

Solid State Battery 7 of Example 7 was fabricated in the same manner as Example 1 except that Electrode 6 was used instead of Electrode 1.
The voltage of Fabricated Solid State Battery 7 was measured to be 2.03 V. The capacity per unit area was 130 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 7 were evaluated based on the same evaluation criteria as in Example 1. The results are shown in Table 1.

Example 8

Preparation of Positive Electrode

The first liquid composition 2 and the second liquid composition 2 for forming a resin layer were individually filled into separate inkjet discharging devices equipped with GEN5 heads (available from Ricoh Printing Systems Co., Ltd.). An aluminum foil substrate (50 mm × 50 mm, average thickness: 15 μm) serving as a current collector was placed on the stage, and the positive electrode paint was discharged and applied over a 20 mm × 20 mm area. Next the first liquid composition 1 was discharged and applied to form a shape with an outer dimension of 40 mm × 40 mm, with a 10 mm width for the insulating resin layer and a 20 mm × 20 mm electrode composite layer inside, surrounding the outer perimeter.

The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating. Subsequently, the substrate was heated at 120 degrees Celsius for 10 minutes using a hot plate to remove the first solvent and the second solvent, thereby obtaining Electrode 8.

The surface size of the positive electrode layer of the obtained Electrode 8 was 20 mm × 20 mm, and the warp of the substrate was 0 mm. The average thickness of both the insulating resin layer and the positive electrode layer was measured using a laser microscope (VKX-3000, available from KEYENCE CORPORATION). The insulating resin layer was 120 μm thick, and the positive electrode layer was 98 μm thick, allowing the insulating resin layer in contact with the positive electrode layer to fully cover the topmost part of the positive electrode layer, thereby forming a positive electrode composite layer and insulating resin layer continuously. Additionally, no cracks were observed in the electrode after pressing.

Battery Fabrication

Solid State Battery 8 of Example 8 was fabricated in the same manner as Example 1 except that Electrode 6 was used instead of Electrode 1.

The voltage of Fabricated Solid State Battery 8 was measured to be 2.02 V. The capacity per unit area was 130 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 8 were evaluated based on the same evaluation criteria as in Example 1. The results are shown in Table 1.

Example 9

Preparation of Positive Electrode

The first liquid composition 2 and the second liquid composition 2 for forming a resin layer were individually filled into separate inkjet discharging devices equipped with GEN5 heads (available from Ricoh Printing Systems Co., Ltd.). An aluminum foil substrate (50 mm × 50 mm, average thickness: 15 μm) serving as a current collector was placed on the stage, and the positive electrode paint was discharged and applied over a 20 mm × 20 mm area. Next the first liquid composition 1 was discharged and applied to form a shape with an outer dimension of 40 mm × 40 mm, with a 10 mm width for the insulating resin layer and a 20 mm × 20 mm electrode composite layer inside, surrounding the outer perimeter.

The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating. Subsequently, the substrate was heated at 120 degrees Celsius for 10 minutes using a hot plate to remove the first solvent and the second solvent, thereby obtaining Electrode 9.

Electrode 9 obtained had a positive electrode layer surface size of 20 mm × 20 mm, and the warp of the substrate was 3 mm. The average thickness of both the insulating resin layer and the positive electrode layer was measured using a laser microscope (VKX-3000, available from KEYENCE CORPORATION). The insulating resin layer was 70 μm thick, and the positive electrode layer was 98 μm thick, allowing the positive electrode layer in contact with the insulating resin layer to fully cover the topmost part of the insulating resin layer, thereby forming a positive electrode composite layer and insulating resin layer continuously. Additionally, no cracks were observed in the electrode after pressing.

Battery Fabrication

Solid State Battery 9 of Example 9 was fabricated in the same manner as Example 1 except that Electrode 9 was used instead of Electrode 1.

The voltage of the fabricated solid state battery 9 was measured to be 2.01 V. The capacity per unit area was 131 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 9 were evaluated based on the same evaluation criteria as in Example 1. The results are shown in Table 1.

Example 10

Preparation of Positive Electrode

The first liquid composition 2 for forming the insulating resin layer was filled into an inkjet discharging device equipped with an inkjet head (MH5421F, available from Ricoh Industry Co., Ltd.). An aluminum foil substrate (50 mm × 50 mm, average thickness: 15 μm) was placed on a stage, and the composition was discharged to form a coating with an outer dimension of 30 mm × 30 mm, a width of 5 mm for the insulating resin layer, and an opening of 20 mm × 20 mm exposing the current collector inside.

The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating.

Next, the second liquid composition 2 was discharged using an inkjet discharging device equipped with a GEN5 head (available from Ricoh Printing Systems Co., Ltd.) to fill the inside of the 20 mm × 20 mm opening.

Subsequently, the substrate was heated at 120 degrees Celsius for 10 minutes using a hot plate to remove the first solvent and the second solvent, thereby obtaining Electrode 10 with a positive electrode composite layer-insulating resin layer structure on the electrode substrate.

Electrode 1 obtained had a positive electrode layer surface size of 21 mm × 21 mm, with a warping of the substrate of 3 mm. The average thickness of both the insulating resin layer and the positive electrode layer was measured using a laser microscope (VKX-3000, available from KEYENCE CORPORATION). Each layer was 97 μm thick, allowing the positive electrode to fully cover the topmost part of the insulating resin layer's edge, thereby forming a positive electrode composite layer and insulating resin layer continuously. Additionally, no cracks were observed in the electrode after pressing.

Battery Fabrication

Solid State Battery 10 of Example 10 was fabricated in the same manner as Example 1 except that Electrode 10 was used instead of Electrode 1.

When the battery voltage of the solid-state Battery 10 fabricated was measured, it was 2.03 V. The capacity per unit area was 132 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 10 were evaluated based on the same evaluation criteria as in Example 1. The results are shown in Table 1.

Example 11

Preparation of Positive Electrode

The first liquid composition 2 for forming the insulating resin layer was filled into an inkjet discharging device equipped with an inkjet head (MH5421F, available from Ricoh Industry Co., Ltd.). An aluminum foil substrate (60 mm × 60 mm, average thickness: 15 μm) was placed on a stage, and the composition was discharged to form a coating with an outer dimension of 50 mm × 50 mm, a width of 15 mm for the insulating resin layer, and an opening of 20 mm × 20 mm exposing the current collector inside.

The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating.

Next, the second liquid composition 2 was discharged using an inkjet discharging device equipped with a GEN5 head (available from Ricoh Printing Systems Co., Ltd.) to fill the inside of the 20 mm × 20 mm opening.

Subsequently, the substrate was heated at 120 degrees Celsius for 10 minutes using a hot plate to remove the first solvent and the second solvent, thereby obtaining Electrode 11 with a positive electrode composite layer-insulating resin layer structure on the electrode substrate.

Electrode 11 obtained had a positive electrode layer surface size of 21 mm × 21 mm, with a warping of the substrate of 3 mm. The average thickness of both the insulating resin layer and the positive electrode layer was measured using a laser microscope (VKX-3000, available from KEYENCE CORPORATION). Each layer was 97 μm thick, allowing the positive electrode to fully cover the topmost part of the insulating resin layer's edge, thereby forming a positive electrode composite layer and insulating resin layer continuously. Additionally, no cracks were observed in the electrode after pressing.

Battery Fabrication

Solid State Battery 11 of Example 11 was fabricated in the same manner as Example 1 except that Electrode 11 was used instead of Electrode 1.

The voltage of the fabricated solid state battery 11 was measured to be 2.01 V. The capacity per unit area was 131 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 11 were evaluated based on the same evaluation criteria as in Example 1. The results are shown in Table 1.

Example 12

Preparation of Positive Electrode

The first liquid composition 3 for forming the insulating resin layer was filled into an inkjet discharging device equipped with an inkjet head (MH5421F, available from Ricoh Industry Co., Ltd.). An aluminum foil substrate (50 mm × 50 mm, average thickness: 15 μm) was placed on a stage, and the composition was discharged to form a coating with an outer dimension of 40 mm × 40 mm, a width of 10 mm for the insulating resin layer, and an opening of 20 mm × 20 mm exposing the current collector inside.

The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating.

Next, the second liquid composition 2 was discharged using an inkjet discharging device equipped with a GEN5 head (available from Ricoh Printing Systems Co., Ltd.) to fill the inside of the 20 mm × 20 mm opening.

Subsequently, the substrate was heated at 120 degrees Celsius for 10 minutes using a hot plate to remove the first solvent and the second solvent, thereby obtaining Electrode 12 with a positive electrode composite layer-insulating resin layer structure on the electrode substrate.

Electrode 12 obtained had a positive electrode layer surface size of 21 mm × 21 mm, with no warping of the substrate. The average thickness of both the insulating resin layer and the positive electrode layer was measured using a laser microscope (VKX-3000, available from KEYENCE CORPORATION). Each layer was 98 μm thick, allowing the positive electrode to fully cover the topmost part of the insulating resin layer's edge, thereby forming a positive electrode composite layer and insulating resin layer continuously. Additionally, no cracks were observed in the electrode after pressing.

Battery Fabrication

Solid State Battery 12 of Example 12 was fabricated in the same manner as Example 1 except that Electrode 12 was used instead of Electrode 1.

The voltage of Fabricated Solid State Battery 12 was measured to be 2.02 V. The capacity per unit area was 133 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 12 were evaluated based on the same evaluation criteria as in Example 1. The results are shown in Table 1.

Example 13

Preparation of Positive Electrode

The first liquid composition 2 for forming the insulating resin layer was filled into an inkjet discharging device equipped with an inkjet head (MH5421F, available from Ricoh Industry Co., Ltd.). An aluminum foil substrate (50 mm × 50 mm, average thickness: 15 μm) was placed on a stage, and the composition was discharged to form a coating with an outer dimension of 40 mm × 40 mm, a width of 10 mm for the insulating resin layer, and an opening of 20 mm × 20 mm exposing the current collector inside.
The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating.
Next, the second liquid composition 3 was discharged using an inkjet discharging device equipped with a GEN5 head (available from Ricoh Printing Systems Co., Ltd.) to fill the inside of the 20 mm × 20 mm opening.
Subsequently, the substrate was heated at 120 degrees Celsius for 10 minutes using a hot plate to remove the first solvent and the second solvent, thereby obtaining Electrode 13 with a positive electrode composite layer-insulating resin layer structure on the electrode substrate.
Electrode 13 obtained had a positive electrode layer surface size of 21 mm × 21 mm, with a warping of the substrate of 3 mm. The average thickness of both the insulating resin layer and the positive electrode layer was measured using a laser microscope (VKX-3000, available from KEYENCE CORPORATION). Each layer was 98 μm thick, allowing the positive electrode to fully cover the topmost part of the insulating resin layer's edge, thereby forming a positive electrode composite layer and insulating resin layer continuously. Additionally, no cracks were observed in the electrode after pressing.

Battery Fabrication

Solid State Battery 13 of Example 13 was fabricated in the same manner as Example 1 except that Electrode 13 was used instead of Electrode 1.
The voltage of the fabricated Solid State Battery 13 was measured to be 2.07 V. The capacity per unit area was 140 mAh/g at the first discharge. Charging up to 3.6 V with a constant current at 20 percent of the capacity per unit area calculated from the theoretical capacity of the active material in the positive electrode was done without any issues, and no short circuit occurred.
The "warp," "press resistance," and "battery performance" of Example 13 were evaluated based on the same evaluation criteria as in Example 1. The results are shown in Table 1.

Example 14

Preparation of Positive Electrode

The first liquid composition 2 for forming the insulating resin layer was filled into an inkjet discharging device equipped with an inkjet head (MH5421F, available from Ricoh Industry Co., Ltd.). An aluminum foil substrate (50 mm × 50 mm, average thickness: 15 μm) was placed on a stage, and the composition was discharged to form a coating with an outer dimension of 40 mm × 40 mm, a width of 10 mm for the insulating resin layer, and an opening of 20 mm × 20 mm exposing the current collector inside.
The coated area was then immediately exposed to UV light under a nitrogen atmosphere (light source: UV-LED (available from Phoseon Technology, product name: FJ800), wavelength: 365 nm, irradiation intensity: 30 $mW/cm^2$, irradiation time: 20 s) to cure the coating.
Next, the second liquid composition 4 was discharged using an inkjet discharging device equipped with a GEN5 head (available from Ricoh Printing Systems Co., Ltd.) to fill the inside of the 20 mm × 20 mm opening.
Subsequently, the substrate was heated at 120 degrees Celsius for 10 minutes using a hot plate to remove the first solvent and the second solvent, thereby obtaining Electrode 14 with a positive electrode composite layer-insulating resin layer structure on the electrode substrate.
Electrode 14 obtained had a positive electrode layer surface size of 21 mm × 21 mm, with a warping of the substrate of 3 mm. The average thickness of both the insulating resin layer and the positive electrode layer was measured using a laser microscope (VKX-3000, available from KEYENCE CORPORATION). Each layer was 98 μm thick, allowing the positive electrode to fully cover the topmost part of the insulating resin layer's edge, thereby forming a positive electrode composite layer and insulating resin layer continuously. Additionally, no cracks were observed in the electrode after pressing.

Battery Fabrication

Solid State Battery 14 of Example 14 was fabricated in the same manner as Example 1 except that Electrode 14 was used instead of Electrode 1.

The voltage of Fabricated Solid State Battery 14 was measured to be 2.02 V. The capacity per unit area was 132 mAh/g for the initial discharge capacity. Charging up to 3.6 V with a constant current at 20 percent of the capacity per unit area calculated from the theoretical capacity of the active material in the positive electrode was done without any issues, and no short circuit occurred.

The "warp," "press resistance," and "battery performance" of Example 14 were evaluated based on the same evaluation criteria as in Example 1. The results are shown in Table 1.

Comparative Example 1

The first liquid composition 2 for forming a resin layer was filled into an inkjet discharging device equipped with GEN5 heads (available from Ricoh Printing Systems Co., Ltd.). An aluminum foil substrate (50 mm × 50 mm, average thickness: 15 μm) serving as a current collector was placed on the stage, and the first liquid composition 1 was discharged and applied to form a shape with an outer dimension of 40 mm × 40 mm, with a 10 mm width for the insulating resin layer and a 20 mm × 20 mm opening exposing the current collector inside.

The coated area was then immediately exposed to UV light under a nitrogen atmosphere (light source: UV-LED (available from Phoseon Technology, product name: FJ800), wavelength: 365 nm, irradiation intensity: 30 mW/cm$^2$, irradiation time: 20 s) to cure the coating. Next, the substrate was heated at 120 degrees C for 1 minutes using a hot plate to remove the solvent. The warping amount of the substrate was 5 mm. The warping of the substrate was significant, and in the subsequent process, the second liquid composition 1 could not be discharged and applied to fill the inside of the 20 mm × 20 mm opening using the inkjet discharging device equipped with GEN5 heads (available from Ricoh Printing Systems Co., Ltd.). The average thickness of the insulating resin layer was measured using a laser microscope (available from KEYENCE CORPORATION, model: VKX-3000) and found to be 97 μm.

For Comparative Example 1, "warping" was evaluated based on the same evaluation criteria as in Example 1. The results are shown in Table 1. Since the positive electrode layer could not be formed by applying the second liquid composition 1, neither "warping" or "battery performance" was not evaluated.

Comparative Example 2

The second liquid composition 1 was filled into an inkjet discharging device equipped with GEN5 heads (available from Ricoh Printing Systems Co., Ltd.). An aluminum foil substrate (50 mm × 50 mm, average thickness: 15 μm) serving as a current collector was placed on the stage, and the positive electrode paint was discharged and applied over a 20 mm × 20 mm area.

Next, the substrate was heated at 120 degrees C for 1 minutes using a hot plate to remove the solvent. The warping amount of the substrate was 5 mm. The warping of the substrate was significant, and in the subsequent process, the first liquid composition 2 for forming the resin layer was filled into the inkjet discharge device equipped with GEN5 heads (available from Ricoh Printing Systems Co., Ltd.). It was not possible to discharge and apply the first liquid composition 1 in a shape that surrounded the outer perimeter of a 40 mm × 40 mm area, with a 10 mm wide insulating resin layer containing a 20 mm × 20 mm electrode composite layer inside. The average thickness of the positive electrode composite layer was measured using a laser microscope (available from KEYENCE CORPORATION, model: VKX-3000) and found to be 97 μm.

For Comparative Example 2, "warping" was evaluated based on the same evaluation criteria as in Example 1. The results are shown in Table 1. Since the positive electrode layer could not be formed by applying the second liquid composition 1, neither "warping" or "battery performance" was not evaluated.

Table 1

| | Thickness (μm) of positive electrode composite layer□ | Thickness (μm) of insulating resin layer | Evaluation results | | |
|---|---|---|---|---|---|
| | | | Evaluation on warping | Press resistance | Battery performance (initial discharge capacity) |
| Example 1 | 97 | 97 | S | A | S |
| Example 2 | 98 | 98 | S | A | A |

(continued)

| | Thickness (μm) of positive electrode composite layer□ | Thickness (μm) of insulating resin layer | Evaluation results | | |
|---|---|---|---|---|---|
| | | | Evaluation on warping | Press resistance | Battery performance (initial discharge capacity) |
| Example 3 | 98 | 97 | A | A | A |
| Example 4 | 97 | 98 | A | A | A |
| Example 5 | 98 | 98 | S | A | B |
| Example 6 | 98 | 120 | A | A | A |
| Example 7 | 97 | 70 | A | A | A |
| Example 8 | 98 | 120 | A | A | A |
| Example 9 | 97 | 70 | A | A | A |
| Example 10 | 97 | 97 | A | A | A |
| Example 11 | 97 | 97 | A | A | A |
| Example 12 | 98 | 98 | S | A | A |
| Example 13 | 98 | 98 | A | A | S |
| Example 14 | 98 | 98 | A | A | A |
| Comparative Example 1 | - | 97 | C | - | - |
| Comparative Example 2 | 97 | - | C | - | - |

Aspects of the present disclosure include, but are not limited to the following:

Aspect 1

A method of manufacturing an electrode includes applying a first liquid composition containing a first solvent and polymerizable compounds to a substrate, reacting the first liquid composition, removing the first solvent to form an insulating resin layer, applying a second liquid composition containing an active material and a second solvent to the substrate, and removing the second solvent composition to form an electrode composite layer, wherein the removing the first solvent and the removing the second solvent are conducted at the same time.

Aspect 2

The method according to Aspect 1 mentioned above, wherein the reacting the first liquid composition includes polymerizing the first liquid composition.

Aspect 3

The method according to Aspect 2 mentioned above, wherein the insulating resin layer contains a cross-linked resin.

Aspect 4

The method according to Aspect 3 mentioned above, wherein the polymerizing the first liquid composition includes cross-linking the polymerizable compound to form the cross-linked resin.

Aspect 5

The method according to Aspect 4 mentioned above, wherein the polymerizing the first liquid composition further includes exposing the first liquid composition to light.

Aspect 6

The method according to Aspect 4 mentioned above, wherein the removing the first liquid is conducted after the cross-linking the polymerizable compound.

Aspect 7

The method according to any one of Aspects 1 to 6 mentioned above, wherein the difference between the boiling point of the first solvent and the boiling point of the second solvent is not greater than 40 degrees Celsius.

Aspect 8

The method according to any one of Aspects 1 to 7 mentioned above, wherein the insulating resin layer and the electrode composite layer are in contact in the same plane.

Aspect 9

The method according to any one of Aspects 1 to 8 mentioned above, wherein the electrode composite layer contains a resin with a solubility to the first solvent of 1 percent or less.

Aspect 10

The method according to any one of Aspects 1 to 9 mentioned above, wherein the second solvent changes the insulating resin layer not greater than 10 percent in volume.

Aspect 11

The method according to any one of Aspects 1 to 10 mentioned above, wherein the applying the second liquid composition utilizes an inkjet method to apply the second liquid composition to the substrate.

Aspect 12

A composite electrode includes an insulating resin layer containing a polymerizable compound and an electrode composite layer containing an active material and a resin, wherein the electrode composite layer seeps in the insulating resin layer in a direction perpendicular to the interface therebetween.

Aspect 13

The composite electrode according to Aspect 12 mentioned above, wherein the electrode composite layer is on the upper side of the interface therebetween.

Aspect 14

An electrochemical element contains the composite electrode of Aspect 12 or 13 mentioned above.

Aspect 15

An apparatus for manufacturing an electrode includes a device to apply a first liquid composition containing a first solvent and a polymerizable compound to a substrate to form an insulating resin layer, a device to apply a second liquid composition containing an active material and a second solvent to form an electrode composite layer, and a device to remove the first solvent and the second solvent simultaneously.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1. A method of manufacturing an electrode comprising:

   applying a first liquid composition comprising a first solvent and polymerizable compounds to a substrate;
   reacting the first liquid composition;
   removing the first solvent to form an insulating resin layer;
   applying a second liquid composition comprising an active material and a second solvent to the substrate; and
   removing the second solvent composition to form an electrode composite layer,
   wherein the removing the first solvent and the removing the second solvent are conducted simultaneously.

2. The method according to claim 1,
   wherein the reacting the first liquid composition comprises polymerizing the first liquid composition.

3. The method according to claim 2,
   wherein the insulating resin layer comprises a cross-linked resin.

4. The method according to claim 3,
   wherein the polymerizing the first liquid composition comprises cross-linking the polymerizable compound to form the cross-linked resin.

5. The method according to claim 4,
   wherein the polymerizing the first liquid composition further comprises exposing the first liquid composition to light.

6. The method according to claim 4,
   wherein the removing the first liquid is conducted after the cross-linking the polymerizable compound.

7. The method according to any one of claims 1 to 6,
   wherein a difference between a boiling point of the first solvent and a boiling point of the second solvent is not greater than 40 degrees Celsius.

8. The method according to any one of claims 1 to 6,
   wherein the insulating resin layer and the electrode composite layer are in contact in a same plane.

9. The method according to any one of claims 1 to 6,
   wherein the electrode composite layer comprises a resin with a solubility to the first solvent of 1 percent or less.

10. The method according to any one of claims 1 to 6,
    wherein the second solvent changes the insulating resin layer not greater than 10 percent in volume.

11. The method according to any one of claims 1 to 6,
    wherein the applying the second liquid composition utilizes an inkjet method to apply the second liquid composition to the substrate.

12. A composite electrode (25) comprising:

    an insulating resin layer (10)comprising a polymerizable compound; and
    an electrode composite layer (20;40) comprising an active material and a resin,
    wherein the electrode composite layer (20;40) seeps in the insulating resin layer)10) in a direction perpendicular to an interface therebetween.

13. The composite electrode (25) according to claim 12,
    wherein the electrode composite layer (20;40) is on an upper side of the interface therebetween.

14. An electrochemical element (45) comprising:
    the composite electrode (25) of claim 12 or 13.

15. An apparatus (1000) for manufacturing an electrode, comprising:

a device (100) to apply a first liquid composition comprising a first solvent and a polymerizable compound to a substrate to form an insulating resin layer;
a device (400) to apply a second liquid composition comprising an active material and a second solvent to the substrate to form an electrode composite layer; and
a device (300) to remove the first solvent and the second solvent simultaneously.

FIG. 1

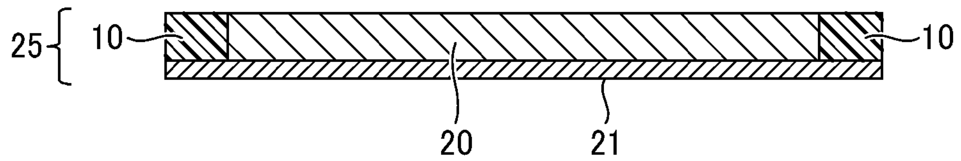


FIG. 2A

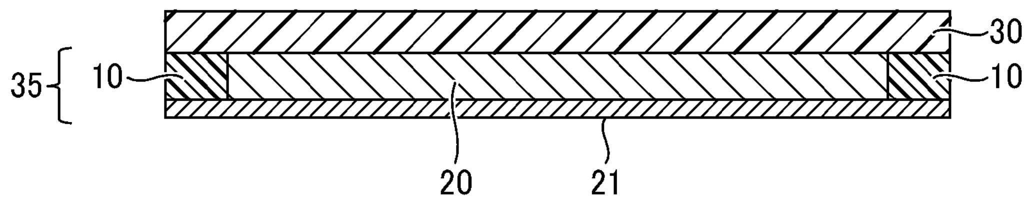


FIG. 2B

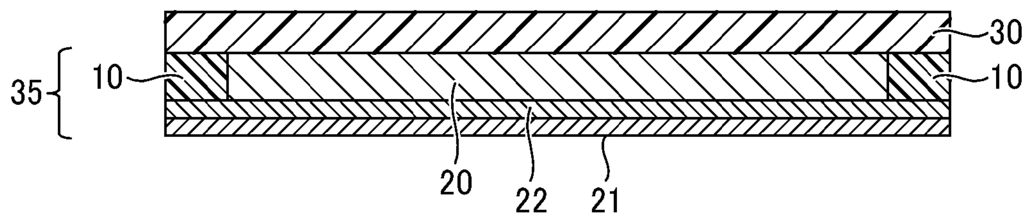


FIG. 2C

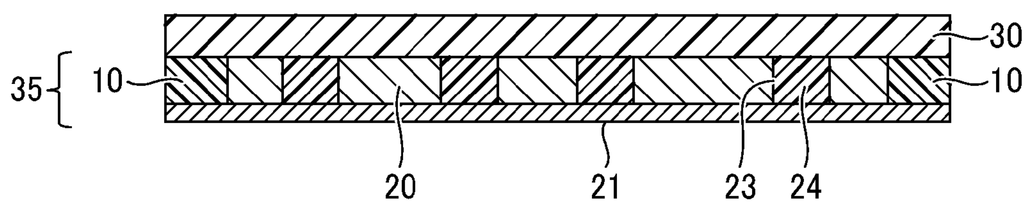

FIG. 3

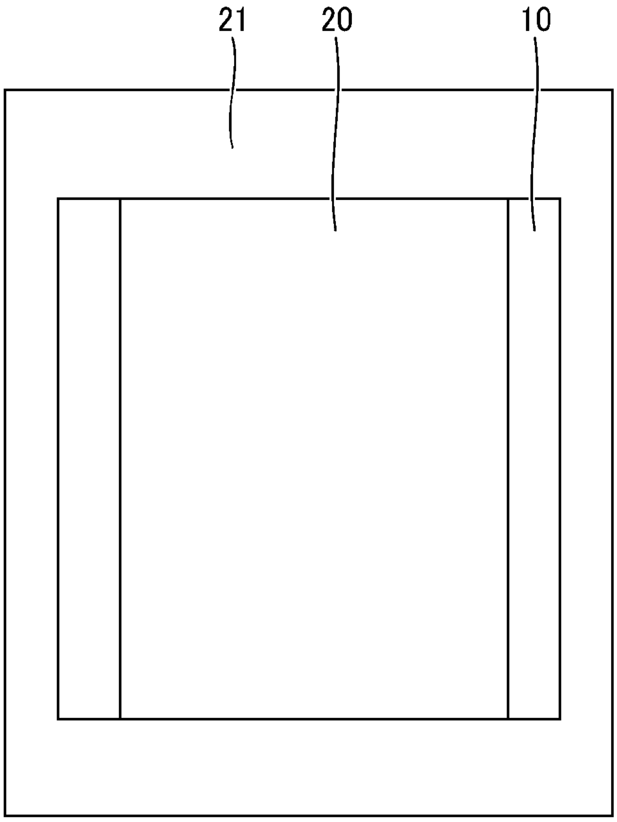


FIG. 4

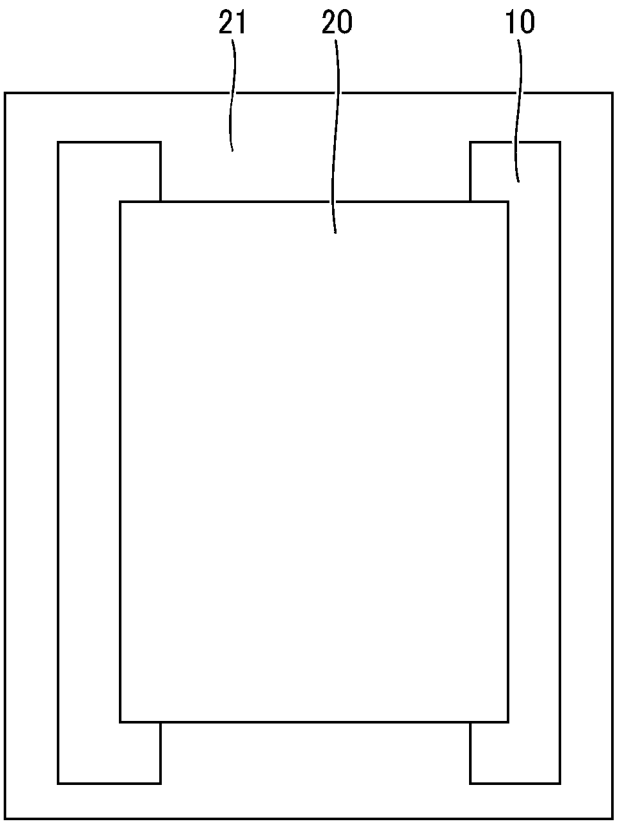

FIG. 5

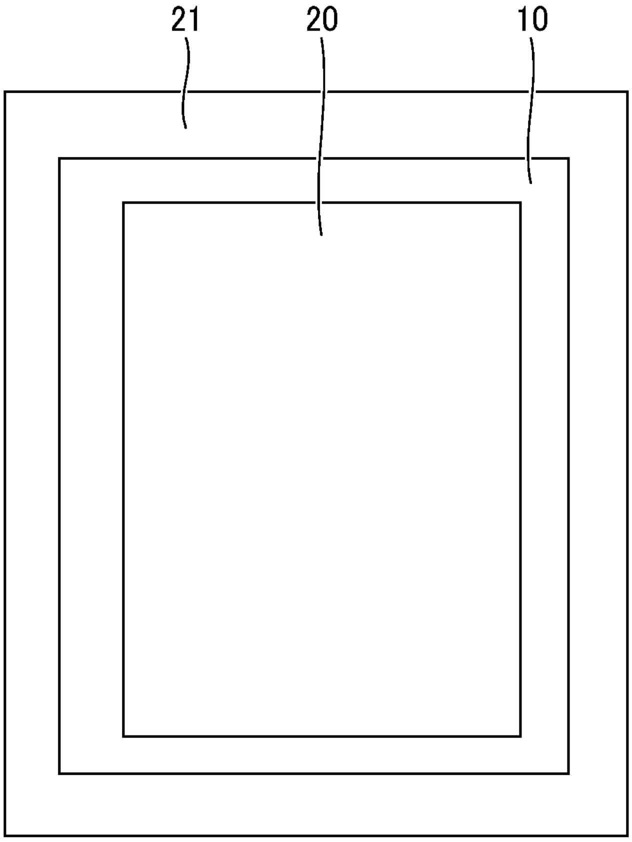

FIG. 6A

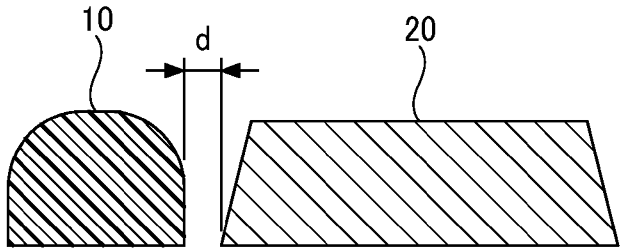


FIG. 6B

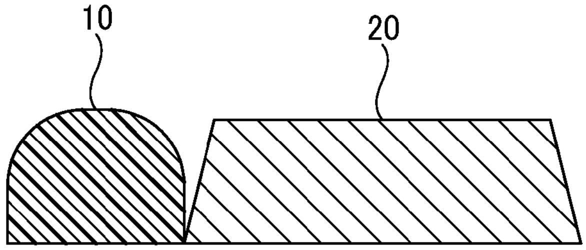


FIG. 6C

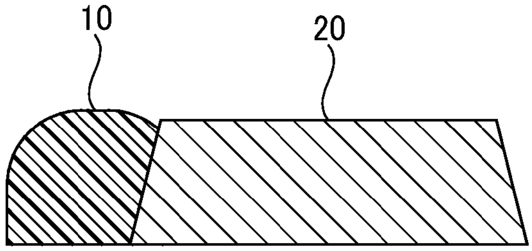


FIG. 6D

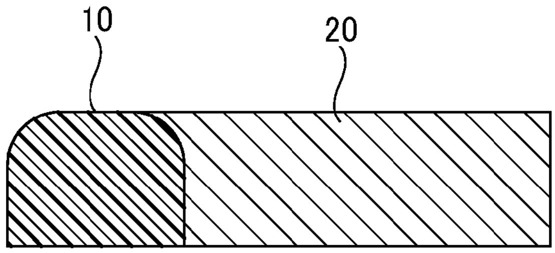

FIG. 7

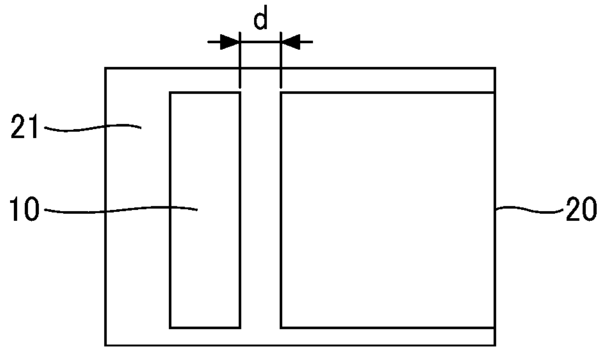


FIG. 8A

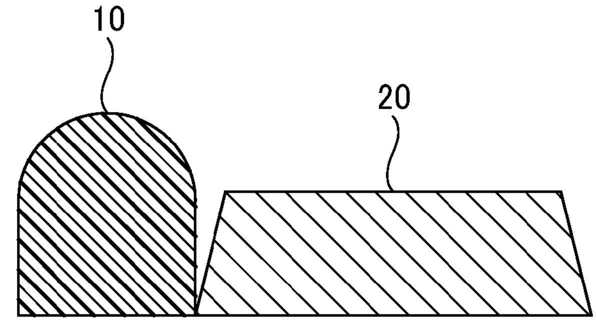


FIG. 8B

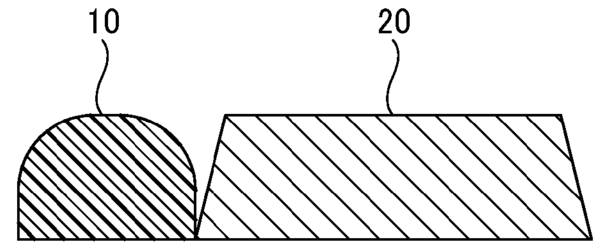


FIG. 8C

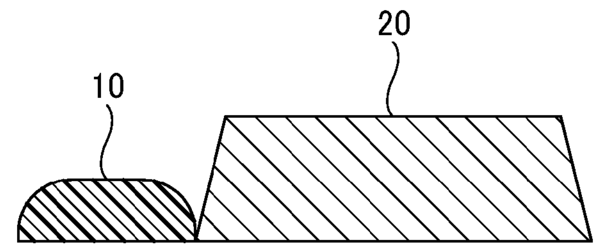

FIG. 9

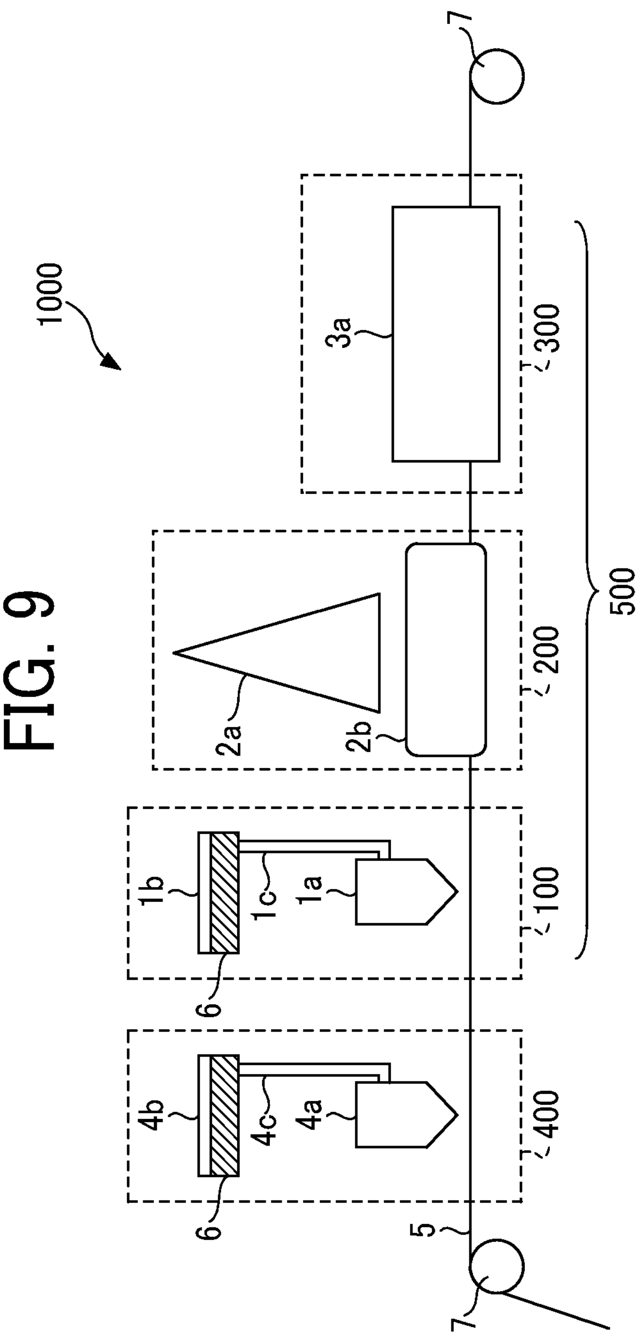

FIG. 10

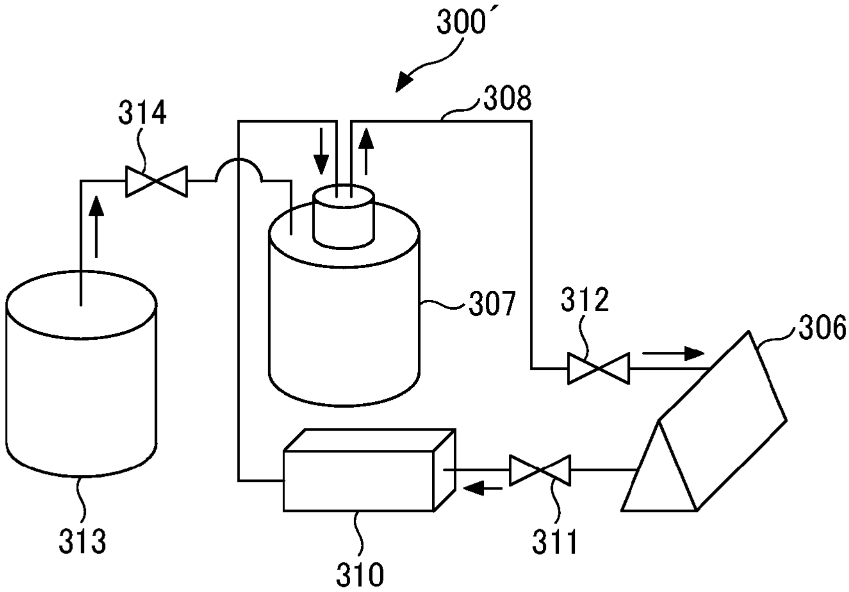
300´
314
308
307
312
306
313
310
311

FIG. 11

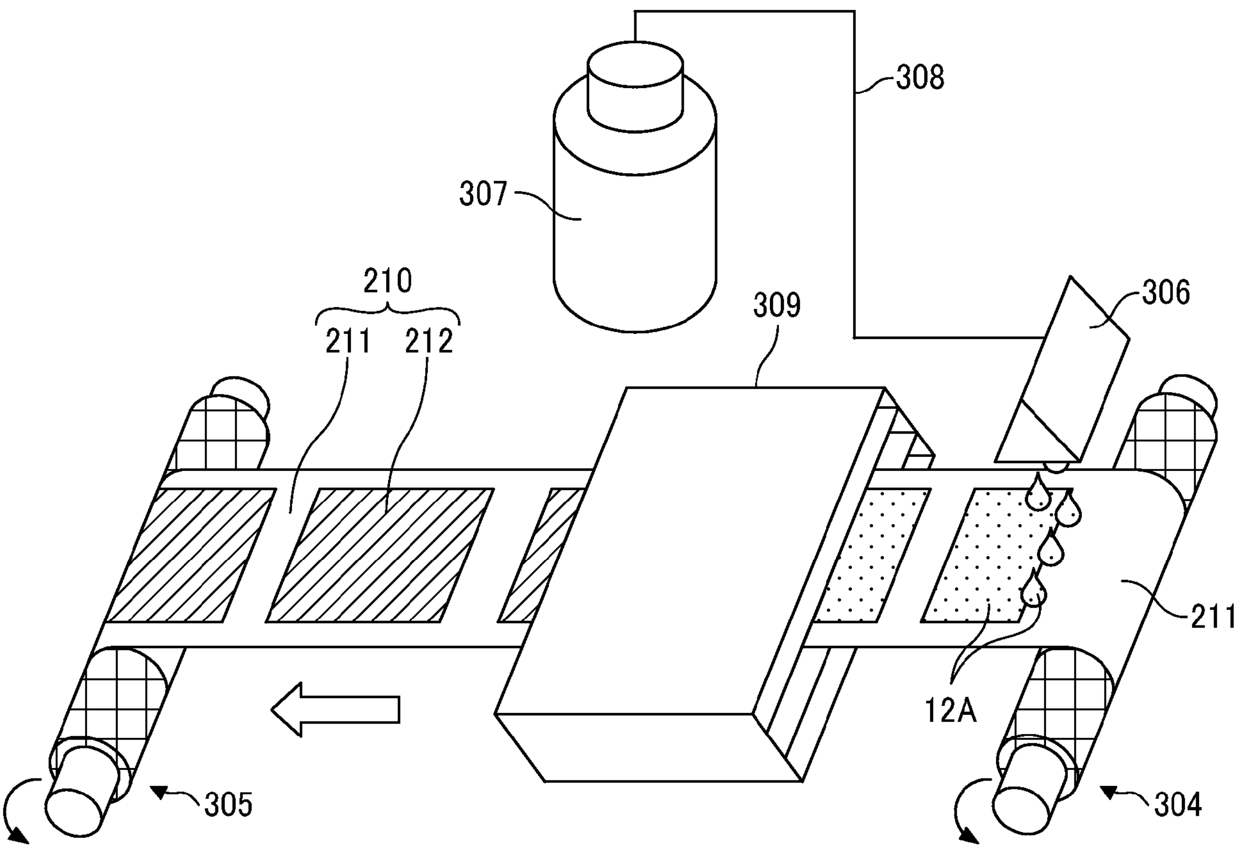
308
307
210
211
212
309
306
211
12A
305
304

FIG. 12

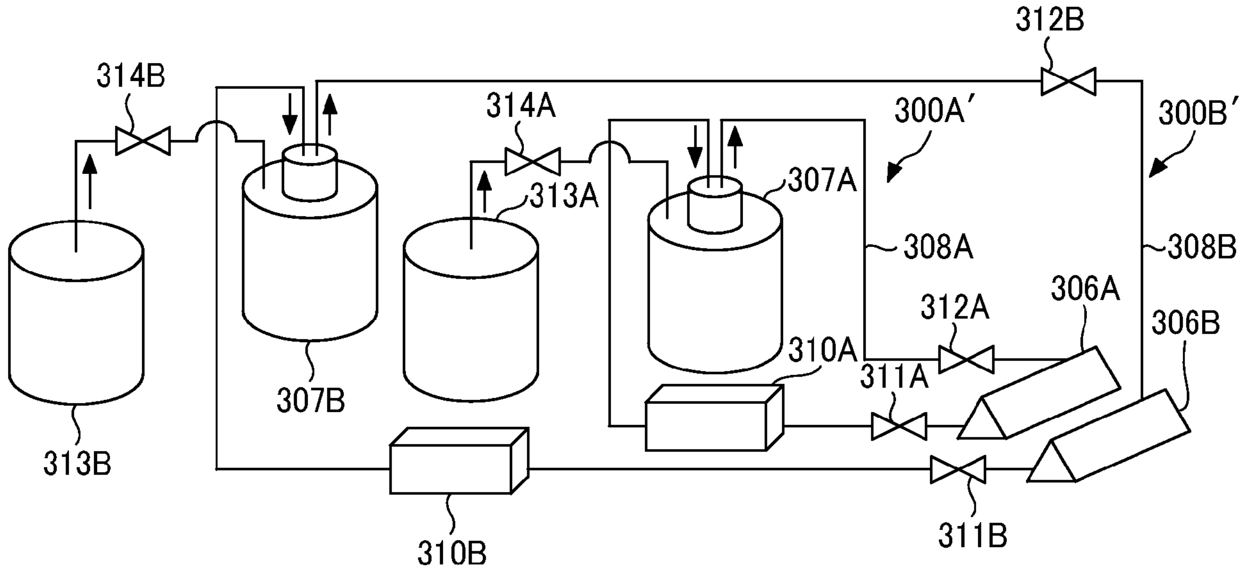
312B
314B
314A
300A′
300B′
307A
313A
308A
308B
312A
306A
306B
310A
311A
307B
313B
310B
311B

FIG. 13

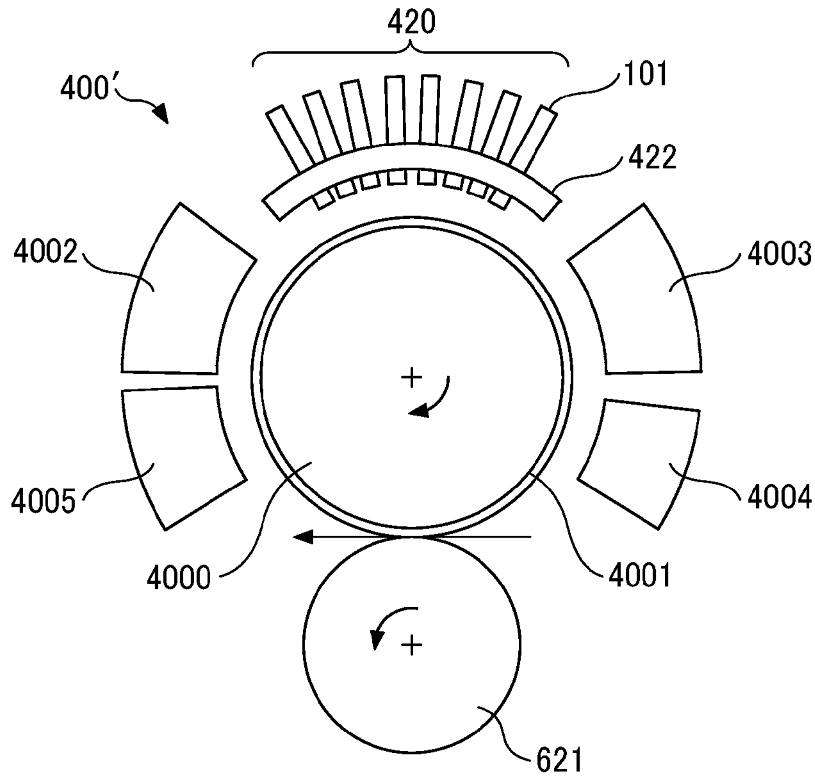
420
400′
101
422
4002
4003
4005
4004
4000
4001
621

FIG. 14

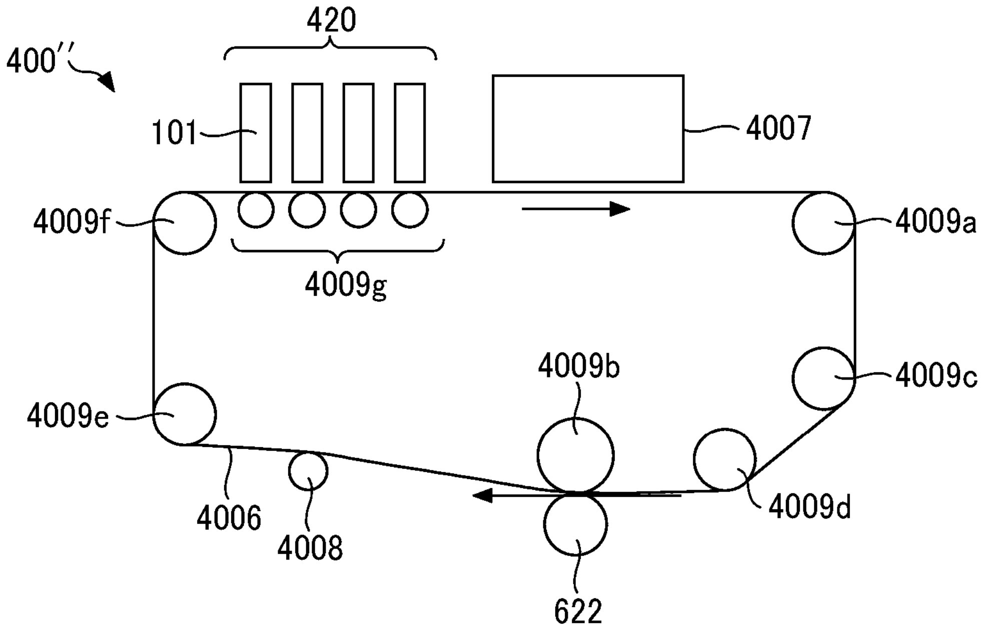
420
400''
101
4007
4009f
4009a
4009g
4009b
4009c
4009e
4009d
4006
4008
622

FIG. 15

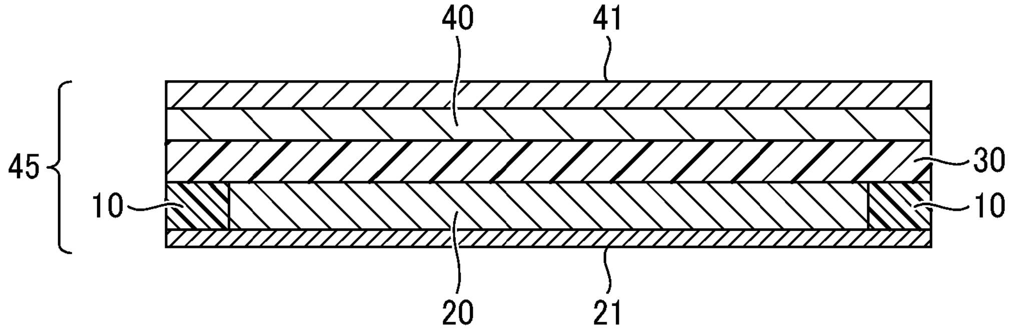
40
41
45
30
10
10
20
21

FIG. 16

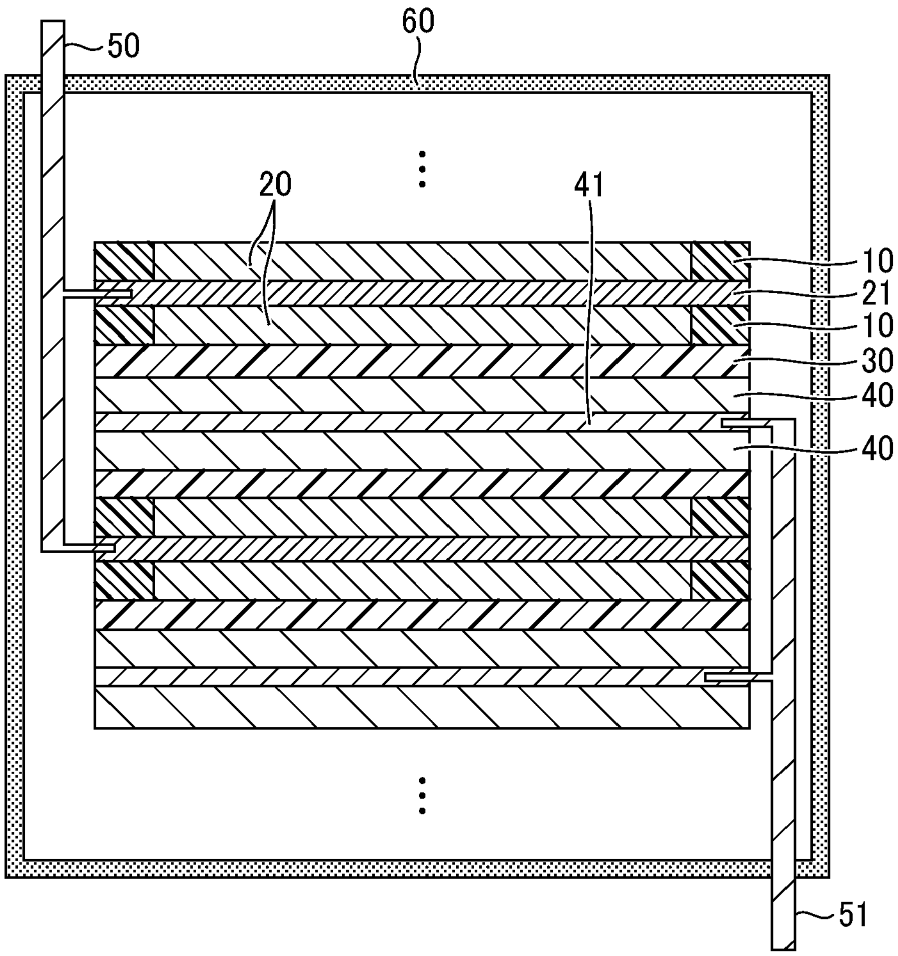


FIG. 17

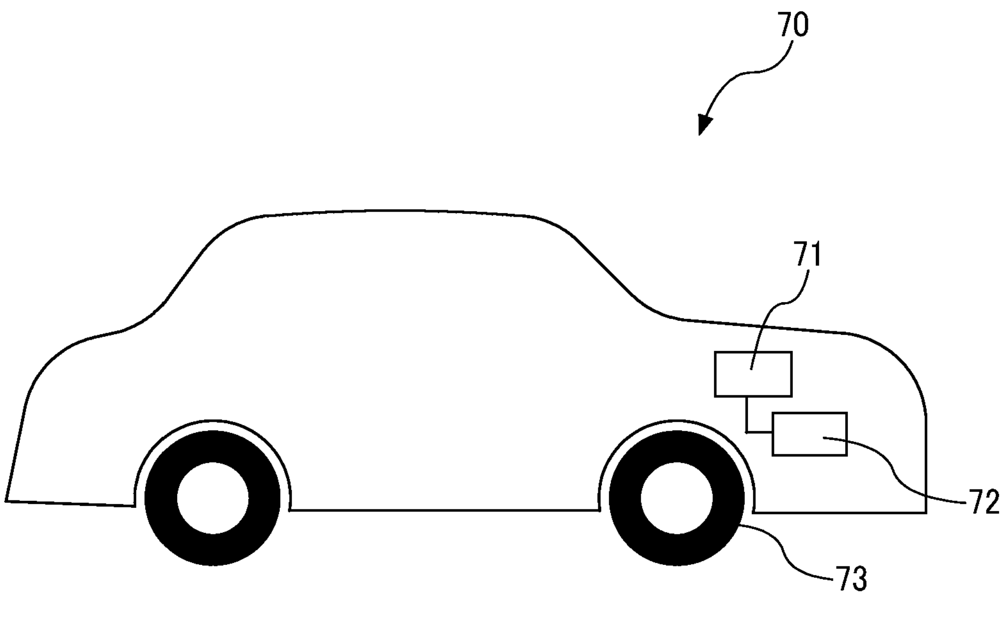

FIG. 18

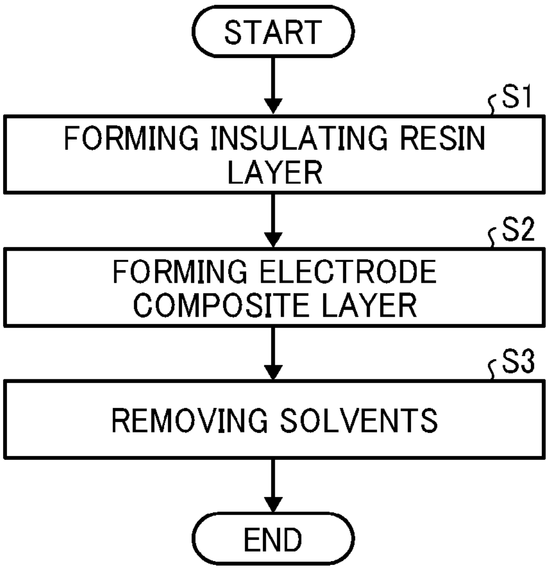
START
S1
FORMING INSULATING RESIN LAYER
S2
FORMING ELECTRODE COMPOSITE LAYER
S3
REMOVING SOLVENTS
END

FIG. 19

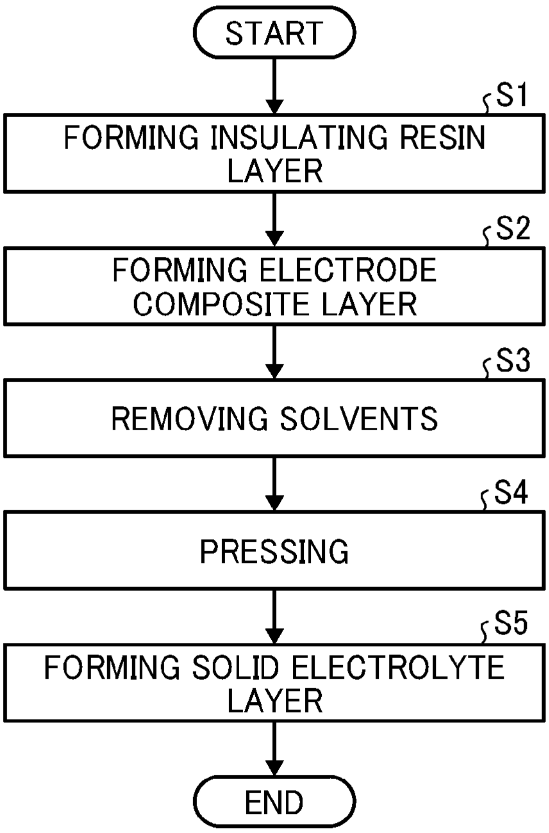
START
S1
FORMING INSULATING RESIN LAYER
S2
FORMING ELECTRODE COMPOSITE LAYER
S3
REMOVING SOLVENTS
S4
PRESSING
S5
FORMING SOLID ELECTROLYTE LAYER
END

Europäisches Patentamt
European Patent Office
Office européen des brevets

# EUROPEAN SEARCH REPORT

Application Number
EP 24 21 6213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | KR 2017 0002348 A (LG CHEMICAL LTD [KR])<br>6 January 2017 (2017-01-06)<br>* paragraphs [0070] - [0075]; figure 1 *<br>----- | 12-14<br><br>1-11 | INV.<br>H01M4/04<br>H01M4/13<br>H01M4/139<br>H01M4/62 |
| A | US 6 096 101 A (LIU PEIKANG [US] ET AL)<br>1 August 2000 (2000-08-01)<br>* claims 8,9 *<br>----- | 1-11 | |
| X | EP 4 223 428 A1 (RICOH CO LTD [JP])<br>9 August 2023 (2023-08-09)<br>* paragraphs [0032] - [0044]; figure 1 *<br>----- | 15 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 27 May 2025 | Meini, Stefano |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 6213

This annex lists the patent family members relating to the patent documents cited in the above-mentioned European search report. The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| KR 20170002348 A | 06-01-2017 | NONE | |
| US 6096101 A | 01-08-2000 | US 6096101 A | 01-08-2000 |
| | | US 6503284 B1 | 07-01-2003 |
| EP 4223428 A1 | 09-08-2023 | EP 4223428 A1 | 09-08-2023 |
| | | KR 20230117665 A | 08-08-2023 |
| | | PL 4223428 T3 | 28-10-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019061943 A
- JP 20031911628 A
- WO 97044363 A1
- JP 2005298757 A
- JP 2010513589 A
- JP 2001163907 A
- JP 2001138504 A


### Non-patent literature cited in the description


- *J. Power Sources*, 2018, vol. 396, 33-40
- *J. Mater. Chem. A.*, 2021, vol. 9, 4117-4125